**Europäisches Patentamt**

**European Patent Office**

**Office européen des brevets**

(19)

(11) Veröffentlichungsnummer : **0 241 009 B1**

(12)

# EUROPÄISCHE PATENTSCHRIFT

(45) Veröffentlichungstag der Patentschrift :
**15.01.92 Patentblatt 92/03**

(51) Int. Cl.⁵ : **B29C 67/18, B29C 33/12, E06C 9/04, B29C 45/14**

(21) Anmeldenummer : **87105196.7**

(22) Anmeldetag : **08.04.87**

(54) **Verfahren und Formwerkzeug zur Herstellung eines in ein Mauerwerk einsetzbaren Steigbügels.**

(30) Priorität : **08.04.86 CA 506119**

(43) Veröffentlichungstag der Anmeldung :
**14.10.87 Patentblatt 87/42**

(45) Bekanntmachung des Hinweises auf die
Patenterteilung :
**15.01.92 Patentblatt 92/03**

(84) Benannte Vertragsstaaten :
**AT BE CH DE FR GB IT LI NL**

(56) Entgegenhaltungen :
**CH-A- 374 196**
**DE-A- 2 514 587**
**DE-A- 3 322 985**
**GB-A- 2 112 316**
**GB-A- 2 188 954**
**US-A- 4 422 995**
**US-A- 4 660 681**

(56) Entgegenhaltungen :
**PATENT ABSTRACTS OF JAPAN, Band 9, Nr.**
**142 (M-388)[1865], 18. Juni 1985; & JP-A-60**
**21222 (MISAWA HOOMU K.K.) 02-02-1985**
**BETONWERK + FERTIGTEIL-TECHNIK, Band**
**48, Nr. 4, April 1982, Seiten A68-A69, Wiesba-**
**den, DE; "MSU-Steigbügel"**

(73) Patentinhaber : **Zenhäusern, Heinrich**
**Birmensdorferstrasse 134**
**CH-8902 Urdorf Z.H. (CH)**

(72) Erfinder : **Zenhäusern, Heinrich**
**Birmensdorfer Strasse 134**
**CH-8902 Urdorf (CH)**
Erfinder : **Weber, Robert**
**65 Forsythe Street**
**Oakville Ontario L6K 3R7 (CA)**

(74) Vertreter : **Zapfe, Hans, Dipl.-Ing.**
**Am Eichwald 7, Postfach 20 01 51**
**W-6056 Heusenstamm 2 (Rembrücken) (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Herstellen eines in ein Mauerwerk einsetzbaren, U-förmigen Steigbügels, der einen entsprechend geformten, zwei parallele Schenkel und einen diese verbindenden Quersteg aufweisenden metallischen Steigbügelkern enthält, der in seiner vorgegebenen geometrischen Form in ein Formwerkzeug eingelegt und darin zentrisch und axial gehalten wird und auf dessen Schenkeln zwei an ihren freien Enden geschlossene Ankerhülsen und auf dessen dazwischenliegendem Abschnitt ein Mantel angeordnet sind, die aus Kunststoff bestehen und von denen mindestens ein Teil durch Druckgießen des Kunststoffs gebildet wird, wobei der Mantel an die Ankerhülsen angeformt ist, so daß der Steigbügelkern von einer kontinuierlich zusammenhängenden dichten Kunststoffschicht umgeben ist.

Ein derartiges Verfahren ist durch die EP-A-0 173 227 bekannt.

Obwohl dies dort nicht näher beschrieben ist, wird bei einem Verfahren dieser Art der gesamte Steigbügelkern in eine entsprechend ausgebildete Gußkammer einer Gußform eingelegt und dort gegenüber der Kammerwand mit einer Anzahl Zentrierstifte in einem bestimmten Abstand von dieser gehalten, derart, daß die anschließend druckgespritzten, miteinander zusammenhängenden, aus Kunststoff bestehenden Mantel- und Ankerhülsen die jeweils gewünschte, gleichmäßige Schichtdicke aufweisen. Dabei müssen die durch die Zentrierstifte in der erstarrten Kunststoffschicht ausgesparten Löcher nachträglich mit Kunststoffmaterial aufgefüllt werden, was zusätzliche bearbeitungskosten mit sich bringt.

Bei einer Weiterentwicklung dieses Verfahrens sind die Zentrierstifte in der Kammerwand radial verschiebbar angeordnet, so daß sie durch den Spritzgußdruck vom in die Gußkammer eingepreßten Kunststoffmaterial entgegen einer Federkraft in die Kammerwand eingeschoben werden. Durch diese Maßnahme wird zwar eine zusätzliche bearbeitung der kunststoffumhüllten Steigbügel vermieden, jedoch kann ein Eindringen von Kunststoffmasse in den Zwischenraum zwischen Zentrierstift und Zentrierstiftführung nur bei hochpräziser Ausführung der Zentrierstiftführung vermieden werden, was wiederum zu erhöhten Werkzeugkosten führt. Außerdem führt ein ungleichmäßiges Ausschieben der Zentrierstifte zur Fehllagerung des Steigbügelkerns und somit zu unregelmäßigen Schichtdicken am Kunststoffmantel.

Es ist weiterhin auch ein Verfahren zum Herstellen von Steigbügeln bekannt, bei dem auf den Steigbügelkern eine Plastikhülse aufgezogen wird, deren Enden am Steigbügelkern dessen Endteil freilassen, so daß auf letzteren jeweils eine vorgeformte Ankerhülse aufgesteckt und das jeweilige Plastikhülsenende überlappend mit diesem verschweißt werden kann. Im Gebrauch wird jedoch diese Schweißnaht häufig undicht, was zur unsichtbaren Korrosion des Steigbügelkerns führen kann. Außerdem ist diese Herstellungsart sehr aufwendig, da sie nur geringfügig automatisiert werden kann.

Durch die DE-A-3 322 925 ist es weiterhin bekannt, auf das Stangenmaterial für einen Steigbügelkern einen Rohrmantel aus thermoplastischem Kunststoff aufzuschieben, anschließend die solchermaßen hergestellte baugruppe durch Biegen in die vorgegebene Form zu bringen und die freien Enden der Schenkel mit dem Material der Ankerhülsen zu umspritzen, wobei gleichzeitig eine Verschweißung mit dem Rohrmantel erfolgen soll. Dabei muß jedoch der geradlinig aufgeschobene Rohrmantel die ganz erheblichen Verformungskräfte des Kernwerkstoffs aufnehmen, da der Rohling zum Zwecke des Biegens irgendwie eingespannt und gehalten werden muß.

Durch das Dokument "Patent Abstracts" of Japan, Vol. 9, No. 142(M-388) vom 18.06.1985 ist es bekannt, einen geradlinigen Endlosgegenstand dadurch mit Kunststoff zu umhüllen, daß man diesen Gegenstand abwechselnd auf der Kernoberfläche und auf der Oberfläche eines bereits umspritzten Teilabschnitts zentriert. Das betreffende Dokument befaßt sich jedoch nicht mit dem Umspritzen kompliziert gebogener Formkörper und auch nicht mit der Herstellung von Endverschlüssen durch die Spritzmasse sowie mit der axialen Fixierung des Kernmaterials zum Zwecke der Erzeugung eben dieser Endverschlüsse.

Durch die GB-A-2 112 316 ist es bekannt, einzubettende Gegenstände zunächst unmittelbar in einer ersten Form zu halten und darin mit Kunststoff zu umspritzen. Soweit in dem genannten Dokument die Angabe zu finden ist, daß in einer zweiten Gußform die eingebetteten Teile durch das zuerst eingegossene Material gehalten werden, gilt dies nur für die Abstände der eingegossenen Teile untereinander und nicht in sämtlichen Raumkoordinaten gegenüber der Wandung der Gußkammer. Vielmehr stützen sich die eingebetteten Teile mit ihren Stirnseiten und/oder mittels eines zusätzlich aufgeschraubten Teils gegen Wandelemente der Gußkammer ab, so daß eine allseitige Umhüllung auf diese Weise nicht möglich ist. Für die Herstellung von Steigbügeln sind auch diesem Dokument keine Hinweise zu entnehmen.

Der Erfindung liegt daher die Aufgabe zugrunde, ein Verfahren der eingangs beschriebenen Gattung zum Herstellen von Steigbügeln so zu verbessern, daß die Steigbügel unter Vermeidung von Zentrierstiften mit einer kontinuierlichen Kunststoffschicht gleichmäßiger Dicke versehen werden können, ohne daß eine Nachbearbeitung der so hergestellten Steigbügel notwendig wird.

Die Lösung der gestellten Aufgabe erfolgt bei dem eingangs beschriebenen Verfahren erfindungsgemäß

EP 0 241 009 B1

dadurch, daß

a) die Kunststoffschicht in zwei Verfahrensschritten aufgebracht wird, wobei entweder

a1) in einem ersten Schritt auf den freien Schenkelenden des Steigbügelkerns die Ankerhülsen in festem Zustand oder durch Druckgießen und in einem zweiten Schritt auf die dazwischenliegende Teillänge des Steigbügelkerns der Mantel durch Druckgießen aufgebracht werden, oder

a2) in einem ersten Schritt auf einer Teillänge des Steigbügelkerns unter Freilassung der Schenkelenden der Mantel und in einem zweiten Schritt auf den Schenkelenden die Ankerhülsen durch Druckgießen aufgebracht werden, und daß

b) der jeweils im ersten Schritt aufgebrachte Teil der Kunststoffschicht in Verbindung mit Haltemitteln (Dichtungsring, Auswurfeinrichtung, Aufnahmekammer, Zusatzformen) für die Zentrierung und axiale Ausrichtung der zunächst noch unbeschichteten Teillänge(n) des Steigbügelkerns in der für den zweiten Schritt vorgesehenen Gußkammer eines Formwerkzeugs herangezogen wird.

Auf diese Weise wird nicht nur ein wirtschaftliches Herstellungsverfahren eines Steigbügels geschaffen, bei dem die Kunststoffmasse in jedem Querschnitt gleichmäßig verteilt und die Verbindung zwischen Kunststoffmantel und Ankerhülse kontinuierlich verschmolzen ist, sondern bei dem auch der Steigbügelkern gegen irgendwelche Korrosionsströme dauerhaft geschützt ist.

Sofern dabei auch der Ankerhülsenteil in situ durch Umspritzen des Kerns erzeugt wird, können auf diese Weise beide Teile, nämlich Ankerhülsenteil und Mantelteil, vollständig in der gewünschten gleichmäßigen Wandstärke gegossen und an dem jeweils vorher gegossenen Kunststoffteil nahtlos angeschlossen werden, wobei jede Nachbearbeitung des kunststoffumhüllten Steigbügelkerns wegfällt.

Je nach Wunsch können dabei der zwischen den Ankerhülsenteilen liegende Mantelteil oder die beiden Ankerhülsenteile auf den Steigbügelkern durch Druckgießen zuerst aufgeformt werden.

Eine besonders vorteilhafte Ausführungsform des erfindungsgemäßen Verfahrens ist dadurch gekennzeichnet, daß während ein und desselben Gußvorgangs gleichzeitig zwei Steigbügelkerne mit Kunststoffmaterial umhüllt werden, derart, daß die Ankerhülsen um die freien Schenkelenden eines ersten Steigbügelkerns und der Kunststoffmantel um den freien Restteil eines bereits mit Ankerhülsen versehenen zweiten Steigbügelkerns gegossen werden und daß dabei der erste Steigbügelkern außerhalb der Gußkammern für die Ankerhülsen und der zweiten Steigbügelkern im Bereich der bereits aufgeformten und erstarrten Ankerhülsen in den entsprechenden Gußkammern eines Formwerkzeugs zentriert gehalten werden.

Diese Art des Gießens gestattet es, in einem Arbeitsgang alle einem Steigbügelkern entsprechenden Teilbereiche mit Kunststoff zu umhüllen, obwohl ein- und derselbe Steigbügelkern in zwei aufeinanderfolgenden Arbeitsgängen mit Kunststoff in der gewünschten Wandstärke vollständig'umhüllt wird.

Um ein frühzeitiges Entformen der Ankerhülsenteile bzw. des Mantelteils zu ermöglichen oder zu lange Wartezeiten bis zum optimalen Entformungszeitpunkt der Ankerhülsen bzw. des Mantelteils ohne Weiterbearbeitung des noch mit einem Kunststoffmantel bzw. zwei Ankerhülsenteilen zu umhüllenden Steigbügels zu vermeiden, ist eine besonders vorteilhafte Ausführungsform des Verfahrens dadurch gekennzeichnet, daß für das Gießen der beiden Ankerhülsen eines Steigbügelkerns eine gegenüber den Haltemitteln für den Steigbügelkern bewegliche Zusatzform vorgesehen ist, in der die Gußkammern für die Ankerhülsen angeordnet sind, und daß die Zusatzform anschließend an den Gußvorgang der Ankerhülsen und deren Erstarren zum Transport des Steigbügelkerns in die Gußkammer für den Kunststoffmantel und zum lagerichtigen Halten des Steigbügelkerns während des Gußvorganges für den Mantel verwendet wird.

Alternativ kann ein solches Verfahren dadurch gekennzeichnet sein, daß für das Gießen des Kunststoffmantels eines Steigbügelkerns eine gegenüber den Haltemitteln für die Schenkelenden bewegliche Zusatzform vorgesehen ist, die anschließend an den Gußvorgang des Kunststoffmantels und dessen Erstarren zum Transport des Steigbügelkerns in die Gußkammer für die Ankerhülsen und zum lagerichtigen Halten des Steigbügelkerns während des Gußvorgangs für die Ankerhülsen verwendet wird.

Dank dieser Maßnahme braucht jeder Steigbügelkern nur einmal in bezug auf die Gußkammer für die Ankerhülsen bzw. des Mantelteils zentriert werden, während die Form mit den Gußkammern für die Ankerhülsen bzw. des Mantelteils in bezug auf die Form mit der Gußkammer für den Mantelteil bzw. für jede Ankerhülse ein-für allemal lagerichtig angeordnet ist und geführt werden kann, so daß ein nochmaliges Zentrieren des Steigbügelkerns entfällt.

Um eine möglichst ausgeglichene und gleichmäßige Verteilung des Kunststoffmaterials um die verschiedenen Steigbügelkernteile zu erreichen, ist es außerdem vorteilhaft, daß die Gußkammern für die Ankerhülsen eines ersten Steigbügelkerns und die Gußkammer für den Mantel eines zweiten Steigbügelkerns gleichzeitig mit dem gleichen Kunststoffmaterial und mit dem gleichen Druck beaufschlagt werden.

Auf diese Weise wird außerdem bei jedem Spritzvorgang eine vollständige thermoplastische Kunststoffbeschichtung eines Steigbügels, jedoch auf zwei Steigbügel verteilt, gewährleistet.

3

Beim Gießen der Kunststoffumhüllung zweier hintereinander angeordneter Steigbügelkerne ist es vorteilhaft, daß zwei Steigbügelkerne hintereinander angeordnet werden, und daß die Gußkammer für den Mantelteil des zweiten Steigbügelkerns von dessen Quersteg aus und die Gußkammern für die Ankerhülsen des ersten Steigbügelkerns von den Spitzen der Ankerhülsen aus mit flüssigem thermoplastischem Kunststoffmaterial beaufschlagt werden.

Die Erfindung betrifft auch ein Formwerkzeug für die Durchführung des erfindungsgemäßen Verfahrens mit zwei in der Schenkelebene mindestens einer Gußkammer für den Steigbügelkern trennbaren Formhälften, die zumindest eine Gußkammer für den Mantelteil des Steigbügelkerns und Mittel zum lagerichtigen Halten des Steigbügelkerns in der Gußkammer sowie mindestens eine Verbindungsleitung zum Anschluß der Gußkammer an eine Kunststoffpresse aufweisen.

Ein derartiges Formwerkzeug wird für die Herstellung eines Steigbügels verwendet, wie er in der EP-A-0 173 227 beschrieben ist.

Die mit einem solchen bekannten Formwerkzeug verbundenen Nachteile wurden bereits eingangs erwähnt.

Es ist daher die analoge Aufgabe der vorliegenden Erfindung, das bekannte Formwerkzeug so zu verbessern, daß es sich zur einwandfreien Herstellung von vollkommen mit Kunststoff umhüllten Steigbügeln ohne Verwendung von Zentrierstiften in Gußkammern eignet.

Die gestellte Aufgabe wird dadurch gelöst, daß das Formwerkzeug die Merkmale nach dem Kennzeichen des Patentanspruchs 12 enthält, oder, alternativ, die Merkmale nach dem Kennzeichen des Patentanspruchs 14.

Weitere vorteilhafte Ausgestaltungen dieses Formwerkzeugs sind Gegenstand der übrigen, sich auf das Formwerkzeug erstreckenden Unteransprüche.

Mit Hilfe dieser Formwerkzeuge wird der Steigbügel einwandfrei mit Kunststoffmasse einer bestimmten Wandstärke umhüllt, ohne daß eine Nachbearbeitung notwendig wird.

Ausführungsbeispiele und weitere Vorteile des Erfindungsgegenstandes werden in der nachfolgenden Beschreibung anhand der Figuren 1 bis 15 näher erläutert.

Es zeigt:

Fig. 1 einen in einem Einsteigloch verankerten Steigbügel in Perspektive,

Fig. 2 verschiedene Steigbügelteile in Perspektive,

Fig. 3 ein teilweise aufgeschnittenes Steigbügelende in Perspektive,

Fig. 4 eine perspektivisches Ansicht eines Steigbügels dessen Kern dichtend in vorgeformten und aufgezogenen Ankerhülsen und in einem damit verschmolzenen und im Spritzgußverfahren aufgebrachten Mantel eingeschlossen bzw.umhüllt ist,

Fig. 5 eine perspektivische Ansicht der Auswurfseite eines Formteils , der Mittel zum Festhalten der Steigbügel- bzw. Steigbügelkernenden aufweist,

Fig. 6 eine perspektivische Ansicht eines den in Fig. 5 dargestellten Formteil ergänzenden Formteils,

Fig. 7 eine Teilansicht eines Schnittes durch den Aus- bzw. Abwurfformteil in Abwurfstellung mit den Mittel zum Festhalten der Steigbügelenden,

Fig. 8 einen Teilschnitt durch beide Formteile in Schließstellung der Gußform bzw. des Formwerkzeuges wobei auch die Mittel zum Festhalten der Steigbügelenden die dem Gußvorgang entsprechende Lage einnehmen,

Fig. 9 ist eine schematische Darstellung eines Schnitts durch ein zweites Ausführungsbeispiel einer Gußform bzw. eines Formwerkzeuges, dessen Gußkammer einen Steigbügelkern enthält, wobei dieser an von den Steigbügelenden entfernten Stellen gehalten wird,

Fig. 10 ist eine schematische Darstellung eines Schnitts durch die in der Fig. 9 gezeigten Gußform, wobei der Steigbügelkern am Umfang der durch Spritzguß aufgebrachten Ankerhülsen gehalten wird,

Fig. 11 einen Vertikalschnitt eines ersten Ausführungsbeispiels des erfindungsgemäßen Formwerkzeugs nach Schnitt XI-XI der Fig.12,

Fig. 12 eine Draufsicht auf die untere Formhälfte des Formwerkzeuges nach Fig. 11 ,

Fig. 13 einen Vertikalschnitt eines zweiten Ausführungsbeispiels des erfindungsgemäßen Formwerkzeuges nach Schnitt XIII-XIII der Fig. 14 ,

Fig. 14 eine Draufischt auf die untere Formhälfte des Formwerkzeuges nach Fig. 13, und

Fig. 15 einen den Fig en 11 und 13 ähnlichen Vertikalschnitt eines dritten und vierten Ausführungsbeispiels des Formwerkzeuges.

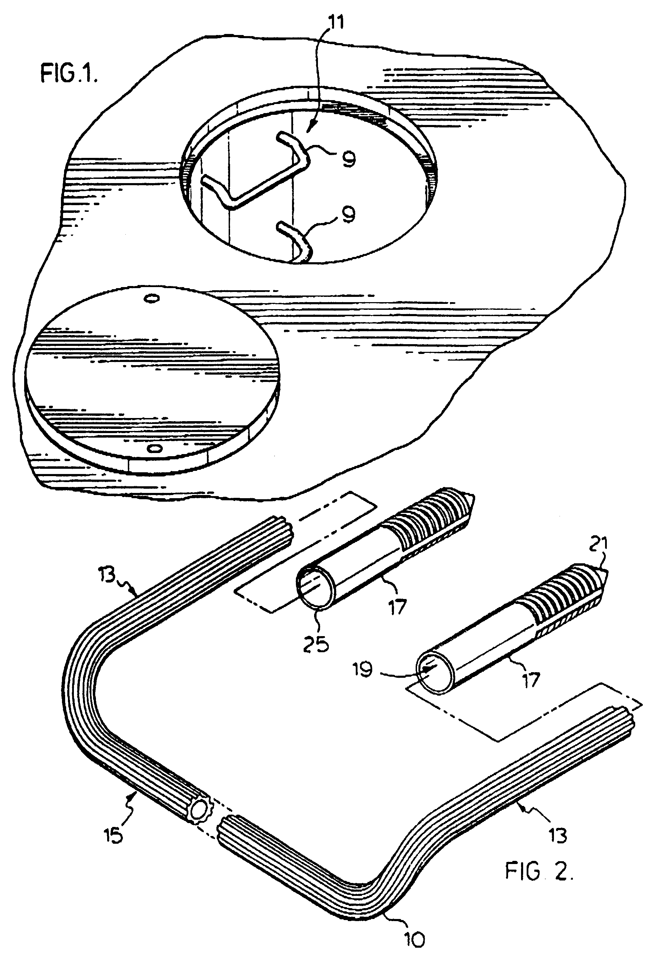

In Fig. 1 sind mehrere Steigbügel 9 gezeigt, die in der Wand 11 eines Einstiegs verankert sind.

Die Figuren 2-4 zeigen einen Steigbügel 9, dessen Steigbügelkern 10 (Fig.2) zwei zueinander parallele Schenkel 13 aufweist, die in einem bestimmten Abstand zueinander angeordnet und durch einen hinteren, als Tritt dienenden Quersteg 15 verbunden sind. Jedes freie Schnekelende ist mit einer vorgeformten Ankerhülse 17 versehen, die an einem Ende 19 zwecks Aufnahme des entsprechenden Schenkels 13 offen ist. Das andere Ende 21 der Ankerhülse 17 ist abgeschlossen und vorzugsweise konisch nach vorne verjüngt, so daß es für das Einstecken bzw. Eintreiben in ein entsprechendes Bohrloch der Wand 11 geeignet ist.

Ein im Spritzgußverfahren aufgebrachter Kunststoffmantel ist als Schutz fest mit dem Steigbügelkern 10 einschließlich seiner Schenkel 13 und des Querstegs verbunden und erstreckt sich bis zu den Enden 19 jeder vorgeformten Ankerhülse 17.

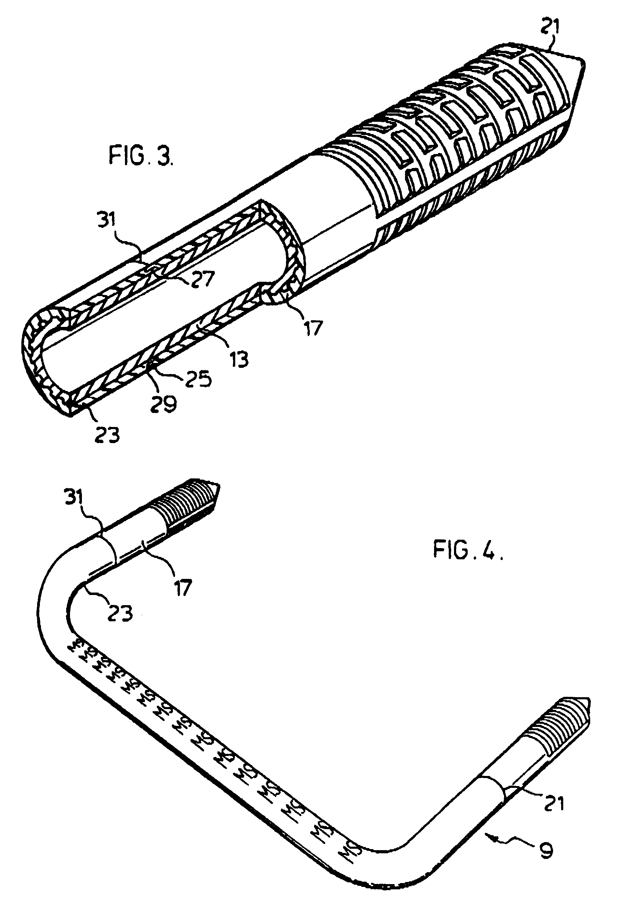

Wie aus Fig. 3 ersichtlich ist, hat die ringförmige Lippe 25 des Endes 19 jeder Ankerhülse 17 einen Innendurchmesser, der etwas größer ist als der Außendurchmesser jedes Schenkels 13, so daß im Bereich der Innenseite der Ringlippe 25 eine ringförmige Tasche 27 gebildet wird, in welche das Kunststoffmaterial des im Spritzgußverfahren hergestellten Mantels 23 bei normalem Pressdruck einfließen kann.

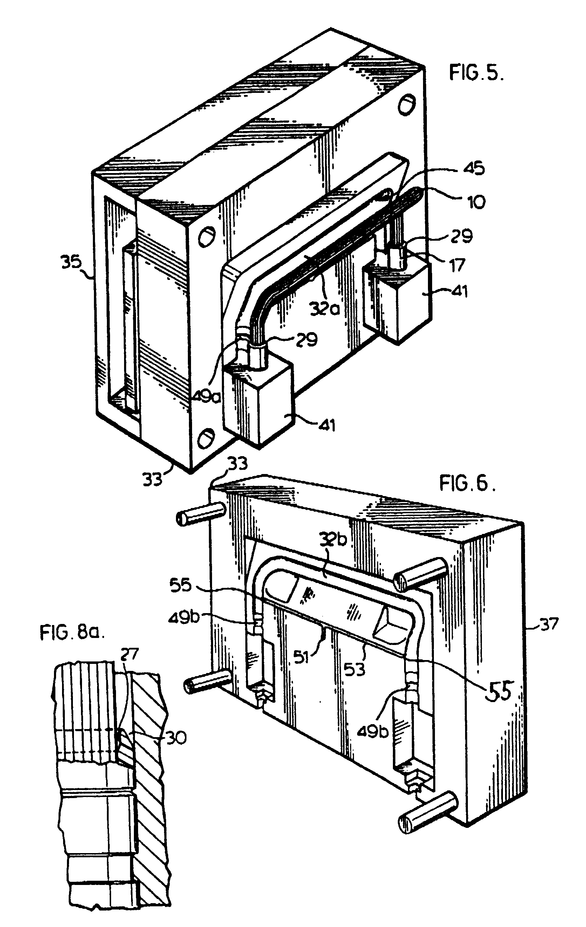

Vorzugsweise hat die Ringlippe 25 am äußeren Umfang eine leicht zum freien Lippenende und nach innen konisch verjüngte Aussenseite 29, die mit der Gußkammer 32 (siehe fig.8) einen Ringraum 30 begrenzt, in den die Kunststoffmasse des Mantels 23, z.B. Polyäthylen, unter normalem Gußdruck einfließen kann. Auf diese Weise wird erreicht, daß die Ringlippe 25 jeder Ankerhülse 17 und das Material des im Spritzgußverfahren aufgebrachten Mantels 23 miteinander verschmelzen und im Bereich der Lippe 25 eine dichte Übergangszone 31 bilden (Fig.3).

Aus den Figuren 2 und 5-8 ist ein Herstellungsverfahren für einen mit einer Kunststoffschicht überzogenen Steigbügel ersichtlich, das folgende Verfahrensschritte aufweist :

Jeder Schenkel 13 des Steigbügelkerns 10 wird mit einer Ankerhülse 17 versehen, indem der Schenkel 13 in das entsprechende offene Ende 19 der Ankerhülse 17, vorzugsweise mit Preßsitz eingeführt bzw. eingeschoben wird. Wie aus den Figuren 5 und 6 ersichtlich ist, weist das Formwerkzeug 33 zwei Formhälften auf, die eine sogenannte Aus- bzw. Abwurfformhälfte 35 und eine sogenannte Einguß- bzw. Einspritzformhälfte (bzw. Formteil) 37 bilden, symmetrisch einander gegenüber angeordnet sind und in Schließstellung fest aneinander liegen. Oer Auswurfformteil 35 des Formwerkzeuges 33 ist mit zwei Aufnahmebohrungen (Figuren 7 und 8) versehen, von denen jede eine Ankerhülse 17 aufnimmt, bevor bzw. nachdem der entsprechende Schenkel 13 in die Ankerhülse eingeschoben wird bzw. wurde. Die Aufnahmebohrungen 39 sind in einem senkrecht zur Bohrungsachse verschiebbaren Abwurfkörper 41 angeordnet, der zwischen einer Abwurfstellung (Fig.7) und einer Spritzgußstellung 43 (Fig.8) bewegbar angeordnet ist. Nachdem der Steigbügelkern 10 mit den Ankerhülsen 17 in die Auswurfformhälfte 35 zentriert eingelegt worden ist, wird der Abwurfkörper 41 in die Auswurfformhälfte 35 eingefahren, bis der über den Abwurfkörper 41 vorstehende Ankerhülsenteil an der Innenwand 32a der Gußkammer 32 für den Mantel 23 anliegt, wobei der Steigbügelkern 10 von der Teilkammer 32a bzw. der entsprechenden Innenseite 45 der Auswurfformhälfte 35 einen vorbestimmten, gleichmäßigen, der Mantelwandstärke entsprechenden Abstand hat.

Ein Zentrierstift 47 (Figuren 7 und 8) ist am Boden jeder Aufnahmebohrung 39 verstellbar angeordnet und gestattet eine Höhenverstellung der Ankerhülse 17 in bezug auf einen der beiden in der Gußkammer 32 übereinander vorgesehenen Dichtungsringe 49, die das entsprechende Ankerhülsenende dichtend umfassen. Jeder Dichtungsring bzw. -Vorsprung 49 besteht aus zwei Hälften 49a und 49b, von denen die eine (49a) im Basisbereich der Teilkammer 32a der Auswurfformhälfte 35 und die andere (49b) im Basisbereich der Teilkammer 32b der Einspritzformhälfte 37 liegt.

Nachdem der Abwurfkörper in die Abwurfformhälfte 35 des Formwerkzeuges 33 eingefahren ist, wird die symmetrisch dazu ausgebildete Einspritzformhälfte 37 auf die Abwurfformhälfte 35 dichtend aufgesetzt, so daß eine Gußkammer 32 gebildet wird, die aus der Teilkammer 32a der Abwurfseite 45 und der Teilkammer 32 b der Einspritzseite besteht. Dabei werden der Quersteg 15 und die Schenkel 13 des Steigbügelkerns 10 bis in den Bereich der Ringlippe 25 der Ankerhülsen 17 in bezug auf die Innenseite der Gußkammer 32 so zentriert, daß sie in einem beliebigen Querschnitt jeweils den gleichen radialen Abschnitt von der Gußkammer-Innenseite haben. Im geschlossenen Zustand des Formwerkzeuges 33 (Fig.8) bilden die beiden Dichtungsringe 49 eine Ringdichtung rund um jede Ankerhülse 17 im Bereich des Aufnahmeendes derselben. Vorzugsweise sind die Dichtungsringe 49 etwas unterhalb der Ringlippe 25 jeder Ankerhülse 17 angeordnet.

Wie aus Fig. 6 ersichtlich, ist das Einspritzformteil 37 des Formwerkzeuges 33 mit einem Eingußkanal 51 versehen, mit dessen Hilfe geschmolzenes Polyäthylen oder dergleichen einem Verteilerkanal 53 zugeführt wird, dessen freie Enden in die Gußkammer 32 einmünden, so daß die an den Kanalmündungen 55 in die Gußkammer 32 eingepreßte flüssige Kunststoffmasse gleichmäßig um den Steigbügelkern 10 verteilt wird. Bei diesem Vorgang dringt die flüssige Kunststoffmasse auch in die ringförmige Tasche 27 und in den Ringraum 30 ein und verschmilzt im Bereich der Ringlippe 25 jeder Ankerhülse 17 unter Bildung eines absolut dichten und gleichförmigen Nahtstellenbereichs 31. Daraufhin werden beide Formhälften 35 und 37 voneinander getrennt. Der Abwurfkörper 45 wird von der Auswurfformhälfte 35 ausgefahren, so daß dann die Bedienungsperson den vollständig ummantelten Steigbügel 9 aus den Aufnahmebohrungen 39 entfernen kann.

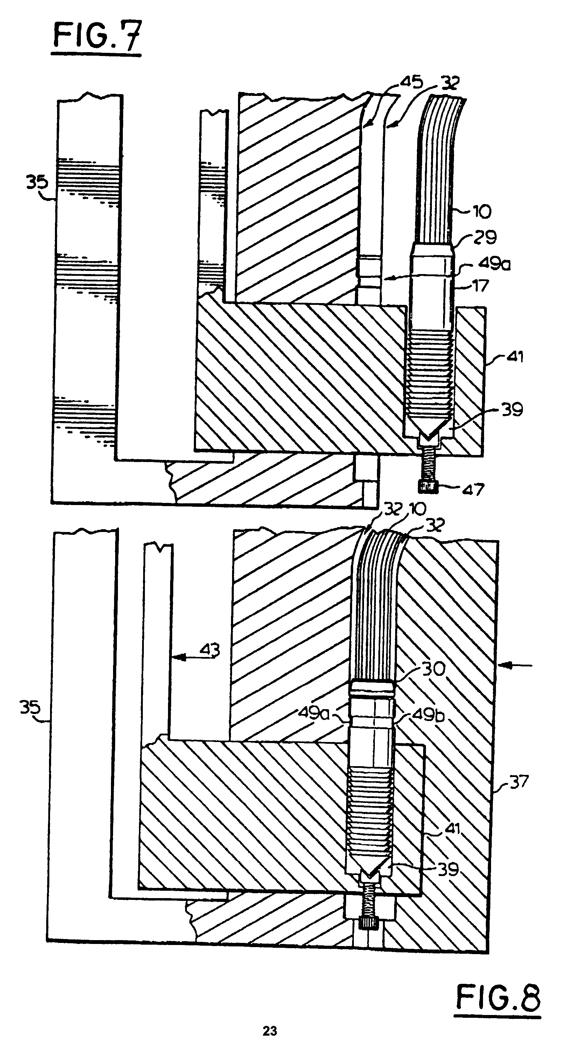

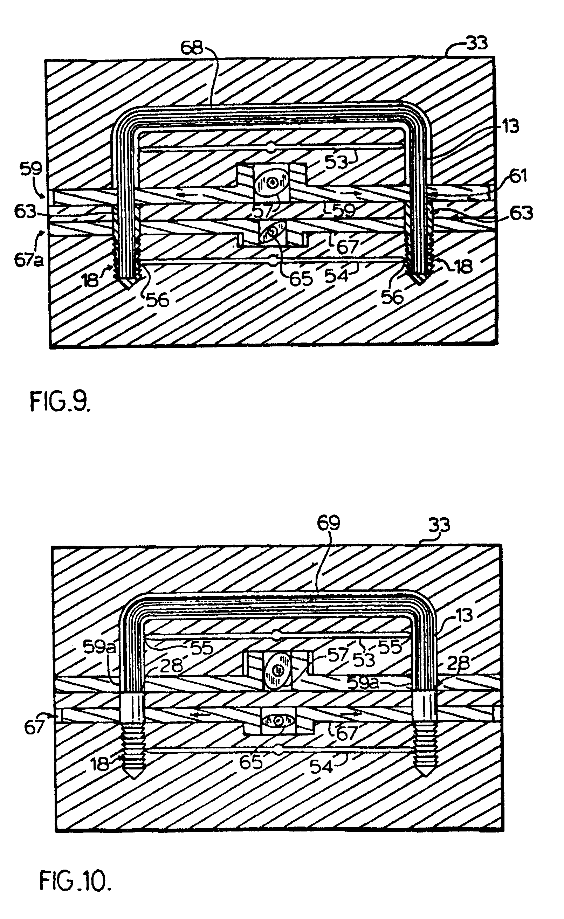

In den Figuren 9 und 10 ist ein anderes Beispiel eines Herstellungsverfahrens für einen vollständig umhüllten Steigbügel 9 dargestellt, der keine vorgeformten Ankerhülsen 17 aufweist. Die Figuren 9 und 10 zeigen ebenfalls ein abgeändertes Ausführungsbeispiel des Formwerkzeuges 33, mit dessen Hilfe der Steigbügel 9 ohne vorgeformte Ankerhülsen hergestellt werden kann.

Das Formwerkzeug 33 weist einen oberen (53) und einen unteren Einspritzkanal (54) auf. Der untere Einspritzkanal 54 weist Mündungen 56 auf, die mit einem der Ankerhülse 17 entsprechenden Gußraum verbunden sind. Eine obere Nocke 57 wirkt auf eine obere Auswurfeinrichtung 59 ein, derart, daß letztere zwischen zwei Endstellungen hin- und her bewegbar ist.

Die in Fig. 9 gezeigte Auswurfeinrichtung 59 nimmt eine Stellung ein, in der sie den Umfang jedes Schenkels 13 des Steigbügels 9 im Nachbarbereich der Ankerhülse dicht umfaßt und festhält. Eine ringförmige Dichtung bzw. Abdichtung 61 wird am Umfang jedes Schenkels 13 gebildet, wenn die Auswurfeinrichtung 59 an den Schenkeln 13 festgelegt ist, wobei gleichfalls der untere Bereich 63 der Gußkammer 32 abgedichtet wird. In dieser Stellung der Auswurfeinrichtung 59 kann geschmolzenes Polyäthylen über den unteren Einspritzkanal 54 und die Mündungen 56 in den unteren abgeschlossenen Bereich 63 der Gußkammer 32 eindringen, worin die Enden des Steigbügelkerns 10 in bezug auf die Gußkammerinnenwand zentriert gehalten sind. Dabei werden spritzgußgeformte Ankerhülsen 18 direkt an den Schenkelenden des Steigbügelkerns 10 ausgebildet. Die obere Nocke 57 wird dann in eine Steuerstellung verdreht, in der die Griffelemente der Auswurfeinrichtung 59 vorzugsweise radial nach innen bzw. außen derart verschoben sind, daß sie mit der Innenseite bzw. Innenwand 45 der Gußkammer fluchten und einen Teilbereich derselben bilden (siehe vor allem die Stellung 59a in Fig.10). Eine untere Steuernocke 65 wirkt auf eine untere Auswurfeinrichtung 67 ein. In Fig. 9 ist die untere Auswurfeinrichtung 67 in der seitlich radial nach außen versetzten Lage 67a dargestellt, in der sie mit der ebenen Innenseite des unteren Bereichs 63 der Gußkammer 32 fluchtet.

Wie aus der Fig. 10 ersichtlich ist, greift die untere Auswurfeinrichtung 67 an den Ankerhülsen 18 an, nachdem diese im Spritzgußverfahren direkt an den Enden der Schenkel 13 angeformt worden sind. In diesem Stadium des Gußvorganges strömt geschmolzenes Polyäthlylen unter Druck durch den oberen Einspritzkanal 53 und die Mündungen 55 in den oberen Bereich 69 der Gußkammer 32 ein und füllt diesen Bereich vollständig aus. Dabei werden der Quersteg 15 und die entsprechenden, bis zum Bereich der Ringlippen 28 der Ankerhülsen 18 reichenden Schenkel 13 mit Kunststoffmasse gleichförmig bzw. gleichmäßig umhüllt, wobei diese Masse im Ringlippenbereich 28 mit den Ankerhülsen 18 verschmilzt und einen dichten, nahtlosen Übergangsbereich 31 bildet (siehe Fig.3). Die untere Steuernocke 65 wird dann derart betätigt, daß die untere Auswurfeinrichtung 67 in die Öffnungsstellung ihrer Organe vorzugsweise radial nach innen und aussen verschoben wird, wie dies in Fig.9 gezeigt ist. Die beiden Formhälten 35 und 37 (Fig.5 und 6) des Formwerkzeugs 33 werden dann voneinander getrennt, und der vollständig mit Kunststoff umhüllte Steigbügel 9 wird aus dem Formwerkzeug 33 entnommen.

Nach einem anderen Verfahrensbeispiel können zuerst der Mantel und anschließend die beiden Ankerhülsen am Steigbügelkern 10 angeformt werden. Dabei muß der Steigbügelkern 10 zuerst an einer Stelle erfaßt werden, die im oberen Endbereich des unteren Teils 63 der Gusskammer 32 liegt, und nach Anformung des Mantels im oberen Bereich 69 der Gußkammer 32 erfaßt werden.

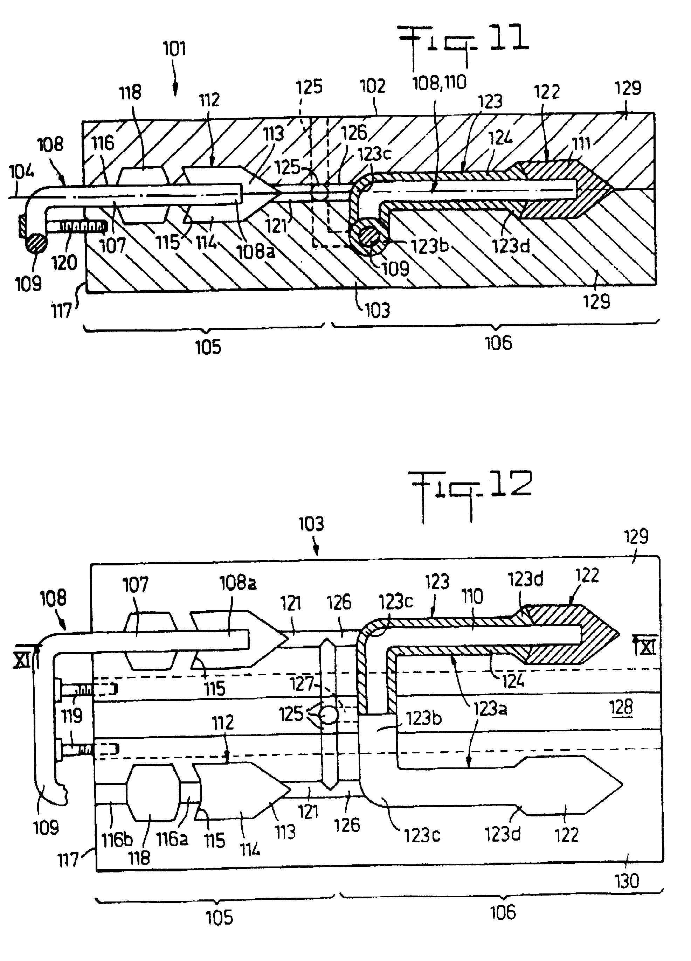

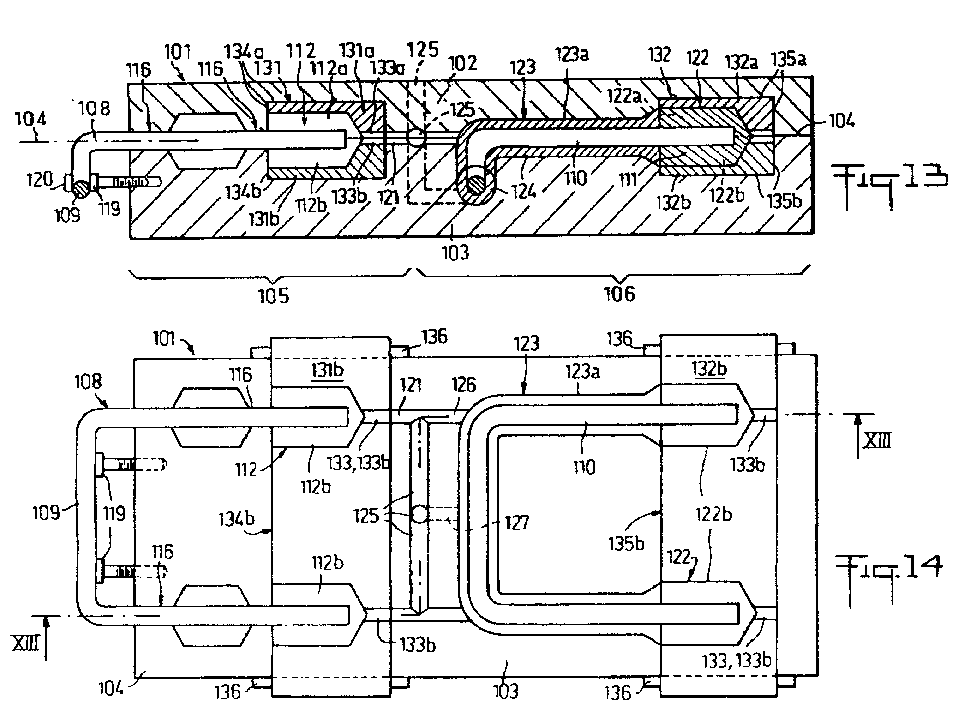

Aus den Figuren 11 und 12 ist ein Formwerkzeug 101 ersichtlich, welches eine obere 102 und eine untere Gußformhälfte 103 besitzt, die in einer Schließ- bzw. Trennebene 104 übereinander angeordnet dicht aneinander liegen und zum Zwecke des Öffnens und Schließens des Formwerkzeugs senkrecht zur Trennebene 104 bewegbar geführt sind.

Dieses Formwerkzeug 101 dient zur Herstellung eines in ein Mauerwerk einsetzbaren Steigbügels, wie er z.B. aus Fig. 11 der europäischen Patentanmeldung 0173227 des gleichen Anmelders ersichtlich ist. Ein derartiger Steigbügel ist im wesentlichen U-förmig ausgebildet und weist zwei zueinander parallele, in gleicher Ebene oder höher liegende Schenkel auf, deren rückwärtige, gegebenenfalls abgekröpfte, Schenkelenden durch einen horizontalen Quersteg verbunden sind, der gegebenenfalls gegenüber den horizontalen Schenkelteilen um einige Zentimeter nach unten versetzt angeordnet ist. Bei einem solchen Steigbügel wird dessen als Vollstab oder Rohr ausgebildeter und aus Aluminium oder einer Stahllegierung bestehender U-förmige Kern in einem Druckgießverfahren vollständig mit einer kontinuierlich zusammenhängenden Kunststoffschicht umhüllt, die an den freien Schenkelenden als Ankerhülsen und zwischen den letzteren an den übrigen Schenkelteilen und am Quersteg als Gußmantel ausgeformt ist.

Das Formwerkzeug 101 besteht nicht nur aus zwei übereinander angeordneten Gußformhälften 102 und 103, sondern ist auch funktions - mäßig in zwei Werkzeugteile 105 und 106 unterteilt, die im gezeigten Ausführungsbeispiel den linken 105 und den rechten Teil 106 des Formwerkzeugs 101 bzw. der beiden Gußformhälften 102 und 103 bilden. Diese Werkzeugteile 105 und 106 können aber auch voneinander getrennt angeordnet sein, wobei dann jeder Werkzeugteil zwei entsprechende Gußformteilhälften hat.

Gemäß dem Ausführungsbeispiel nach den Figuren 11 und 12 ist der eine Werkzeugteil 105 zumindest zur Aufnahme des vorderen und mittleren Abschnitts der Schenkel 107 eines Steigbügelkerns 108 bestimmt, wobei der hintere Schenkelabschnitt und der Quersteg 109 gegebenenfalls außerhalb des entsprechenden Formwerkzeugteils 105 angeordnet sein können. Der andere Werkzeugteil 106 dient hingegen zur Aufnahme eines ganzen Steigbügelkerns 110, der bereits teilweise mit Kunststoffmaterial umgeben ist - im vorliegenden Fall im Bereich der Ankerhülsen 111.

Der erste Werkzeugteil 105 ist genauso wie der zweite Werkzeugteil 106 in jeweils zwei übereinander angeordnete Gußformhälften 102 und 103 unterteilt, die in der Schließ- bzw. Trennebene 104 dicht aneinander liegen, wobei letztere ebenfalls durch jeweils beide Schenkelachsen zumindest eines Steigbügelkerns 108 bzw. 110 bestimmt ist.

Im ersten Werkzeugteil 105 ist für das freie Ende jedes Schenkels 107 eine Gußkammer 112 vorgesehen, die zum Druckgießen jeweils einer Ankerhülse 111 bestimmt und konzentrisch zur jeweiligen Schenkelachse rund um das freie Ende des entsprechenden Schenkels 107 angeordnet ist. Die Gußkammer 112 ist entsprechend der endgültigen Form einer Ankerhülse 111 geformt und weist grundsätzlich einen vorderen kegel- bzw. kegelstumpfförmigen Raum 113 und einen hinteren zylinderförmigen Raum 114 auf, der auf der Rückseite gegebenenfalls durch eine in der Gußkammer 112 zu deren Symmetrieachse geneigt angeordnete kegelstumpfförmige Wand 115 abgeschlossen ist, wobei die Symmetrieachse der Gußkammer 112 und die Schenkelachse des Steigbügelkerns 108 zusammenfallen.

Das vordere Ende des Steigbügelkerns 108 ragt vollständig in den zylinderförmigen Raum 114 der Gußkammer 112 hinein, wobei dieses Ende vorzugsweise nicht in den kegelförmigen Raum 113 dieser Gußkammer 112 eintritt. Wie aus der Zeichnung ersichtlich ist, liegt die obere Hälfte der Gußkammer 112 in der oberen Gußformhälfte 102, während die untere Gußkammerhälfte in der unteren Gußformhälfte 103 angeordnet ist.

Hinter der Gußkammer 112 weist der erste Werkzeugteil 105 für jeden Schenkel 107 des Steigbügelkerns 108 eine konzentrisch zur Schenkelachse angeordnete Ausnehmung 116 auf, die entsprechend der Querschnittsform der Schenkel 107, z.B. zylinderförmig ausgebildet ist und deren jeweilige Schenkel 107 dichtend umschließt. Diese zylinderförmige Ausnehmung 116 beginnt im Bereich der Rückwand 115 der Gußkammer 112 und mündet auf der der Gußkammer 112 abgewandten vertikalen Außenseite 117 des Formwerkzeugteils 105 ins Freie. Auch diese Ausnehmung 116 ist wie die Gußkammer 112 zur Hälfte jeweils in der oberen 102 und in der unteren Gußformhälfte 103 angeordnet. Die Ausnehmung 116 kann, wie in der Zeichnung dargestellt, durch eine größere Kammer 118 unterbrochen sein, die gegebenenfalls auch konzentrisch um den jeweiligen Schenkel 107 des Steigbügelkerns 108 angeordnet und mit Druckluft beaufschlagbar ist, um ein etwaiges Eindringen der Kunststoffmasse von der Gußkammer 112 in die Ausnehmung 116 und rund um den restlichen Schenkelteil zu vermeiden.

Die Ausnehmung 116, die durch die Kammer 118 in zwei voneinander entfernte Ausnehmungsbereiche 116a und 116b unterteilt wird, bildet im vorliegenden Fall die außerhalb der Gußkammer 112 angeordneten Mittel zum lagerichtigen und zentrierten Halten des Steigbügelkerns 108, d.h. des vorderen freien Schenkelbereichs des Steigbügelkerns in bezug auf die Seitenwände der Gußkammer 112 und schließt letztere in Zusammenwirkung mit dem entsprechenden Steigbügelkern 108 dichtend ab.

Um ein zu tiefes Einschieben des vorderen Endbereichs des Steigbügelkerns 108 in die entsprechenden Gußkammern 112 zu vermeiden, sind auf der vertikalen Außenseite z.B. der unteren Gußformhälfte 103 einstellbare Anschläge 119 vorgesehen, die z.B. mit dem Quersteg 109 so zusammenwirken, daß ein weiteres Einschieben der Schenkel 107 in die Gußkammern 112 verhindert wird. Um ein Ausschieben des Steigbügelkerns 108 zu verhindern kann zusätzlich zu dem durch das Andrücken der Ausnehmungen 116a und 116b an die Steigbügelkernschenkel 107 bewirkten Reibungsschluß ein verstellbarer Anschlag 120 vorgesehen sein , der mit dem z.B. abgekröpften Hinterteil jedes Schenkels 107 zusammenwirkt, und zwar derart, daß ein Ausschieben des Steigbügelkerns 108 aus der Gußkammer 112 während des Gußvorgangs unmöglich ist.

Die jeweilige Gußkammer 112 ist über eine in den kegelstumpfförmigen Raum 113 einmündende Leitung 121 mit einer nicht dargestellten Kunststoffpresse verbindbar.

Während des Druckgießvorgangs, der zum Beispiel bei Drücken bis zu 250 bar stattfindet, wird im ersten Werkzeugteil 105 an jedem Steigbügelkernende in der endsprechenden Gußkammer 112 eine Ankerhülse 111 aus Kunststoff, z.B. Polyäthlylen, aufgeformt, wobei die in die Gußkammer 112 eindringenden Schenkelendbereiche 108a des Steigbügelkerns 108 außerhalb der Gußkammer 112 lagegerecht und in bezug auf die Gußkammerwände zentrisch gehalten werden, und zwar mit Hilfe der Mittel 116 und gegebenenfalls der Anschläge 119 und/oder 120, und wobei das Kunststoffmaterial über die Leitung 121 in die Gußkammern 112 eingedrückt wird.

Nach dem Erkalten bzw. Erstarren der die Ankerhülsen 111 bildenden Kunststoffmasse wird zumindest eine der beiden Gußformhälften 102, 103 senkrecht zur Trennebene 104 von dieser weg bewegt, derart, daß der nunmehr mit zwei Ankerhülsen 111 versehene Steigbügelkern 108 aus der entsprechenden Gußformhälfte 102 oder 103 entformt, d.h. entnommen werden kann.

Dieser mit den Ankerhülsen versehene Steigbügelkern 108 wird nach dem Entformen in den zweiten Werkzeugteil 106 eingelegt. Zu diesem Zweck weist der zweite Werkzeugteil 106 jeweils eine Aufnahmekammer 122 für die bereits aufgeformten Ankerhülsen 111 auf, wobei diese Aufnahmekammer 122 der Form und Größe nach jeweils einer der beiden Gußkammern 112 des ersten Formwerkzeugteils 105 entspricht.

An die zylindrischen Abschnitte der Aufnahmekammer 122 sind die Schenkelabschnitte 123a einer U-förmigen Gußkammer 123 angeschlossen, die in Anpassung an den entsprechenden Steigbügelkern 108 am rückwärtigen Schenkelabschnitt ebenfalls nach unten abgekröpft sein kann und einen den Quersteg 109 entsprechenden, quer zu den Schenkelabschnitten 123a verlaufenden, Gußkammerabschnitt 123b aufweist. Diese U-förmige Gußkammer 123 kann im Querschnitt kreisringförmig, oval oder vieleckig ausgebildet sein. Auch hier liegen die Achsen der Schenkelabschnitte 123a und der dazu koaxial angeordneten Aufnahmekammern 122 in der Trenn- bzw. Schließebene 104, derart, daß jeweils eine der Gußformhälften eine der beiden Hälften, die gegebenenfalls zur Trennebene 104 symmetrisch sind, der Schenkelabschnitte 123a der Gußkammer 123 und der Aufnahmekammer 123 aufweisen. Hingegen sind die abgekröpften Gußkammerabschnitte 123c und der quer zu den Schenkelabschnitten 123a verlaufende Gußkammerabschnitt 123b nur in einer der beiden Gußformhälften 102, 103 eingearbeitet, z.B. in der unteren Gußformhälfte 103.

Da die Wandstärke des hinter den Ankerhülsen 111 vorgesehenen Kunststoffmantels 124 geringer ist als jene der Ankerhülsen 111, ist jedes an einer Aufnahmekammer 122 anschließende Ende 123d der U-förmigen Gußkammer 123 in Richtung auf den zylindrischen Teil der Aufnahmekammer 122 z.B. konisch erweitert, bis es an den Umfang dieser Aufnahmekammer 122 anschließt, mit der die Gußkammer 123 in Verbindung steht. Wenn, wie im Ausführungsbeispiel nach den Figuren 11 und 12 gezeigt, das rückwärtige Ankerhülsenende kegelstumpfförmig von außen nach innen in Richtung des freien Steigbügelendes ausgebildet ist, dann weist das Ende 123d der Gußkammer 123 eine dementsprechende Form auf, da letzteres (123d) vom rückwärtigen Ankerhülsenende begrenzt wird.

Die vorne konisch und nach rückwärts anschließend zylindrisch ausgebildete Aufnahmekammer 122 stellt mit ihren Wänden die Mittel zum lagerichtigen Halten des noch nicht mit Kunststoff beschichteten Steigbügelkernteils in der Gußkammer 123, insbesondere in bezug auf die den Steigbügelkern 108 in einem bestimmten Abstand, vorzugsweise konzentrisch umgebende Wand der U-förmigen Gußkammer 123 dar, wobei diese Mittel 122 ebenfalls außerhalb der Gußkammer 123 angeordnet sind.

Die U-förmige Gußkammer 123 wird in vorteilhafter Weise vorne durch die beiden Ankerhülsen 111 dichtend abgeschlossen und von hinten her mit der Kunststoffmasse heaufschlagt, und zwar beispielsweise über eine zentral angeordnete Hauptspeiseleitung 125 und daran angeschlossene Verteilerleitungen 126 und 127, von denen jeweils eine (126) koaxial in den Schenkelabschnitt 123a und eine andere (127) in den Mittelteil des Querstegabschnitts 123b der U-förmigen Gußkammer 123 einmündet.

Ist das Formwerkzeug 101, wie in den Figuren 11 und 12 gezeigt, nicht in zwei voneinander getrennte Werkzeugteile 105 und 106 unterteilt, sondern weist miteinander zusammenhängende Werkzeugteile 105 und 106 auf, so ist es vorteilhaft, Gußkammern 112 für die Ankerhülsen 111 in dem einen Werkzeugteil 105 und die Gußkammer 123 für den Kunststoffmantel 124 in dem anderen Werkzeugteil 106 hintereinander anzuordnen und von einer gemeinsamen Hauptspeiseleitung 125 und entsprechenden Verteilerleitungen 121, 126, 127 mit unter Hochdruck stehender Kunststoffmasse zu beaufschlagen . Auf diese Weise können die beiden Ankerhülsen 111 und der dazwischen liegende Mantel 124 eines Steigbügels gleichzeitig gespritzt werden, wobei die Ankerhülsen 111 an einem ersten Steigbügelkern 108 und der Mantel 124 an einem zweiten Steigbügelkern 110 aufgeformt werden, der schon vorher mit Ankerhülsen versehen worden ist.

Das erfindungsgemäße Druckgußverfahren läuft wie folgt ab :

Zu Beginn des Verfahrens wird nur der eine Werkzeugteil 105 verwendet, während die Verteilerleitungen 126 und 127 zum anderen Werkzeugteil geschlossen sind.

Bei geöffnetem Formwerkzeug 101 wird ein Steigbügelkern 108 lagerichtig in die Gußkammer 112 und die Haltemittel 116, 119 und 120 der unteren Gußformhälfte 103 eingelegt, worauf das Formwerkzeug 101 derart geschlossen wird, daß dessen Gußformhälften 102 und 103 in der Trenn- bzw. Schließebene 104 dicht aneinander liegen und der Steigbügelkern 108 in bezug auf die Gußkammer 112 lagerichtig und zentriert gehalten wird. Nunmehr wird die Gußkammer 112 von deren Spitze 113 aus über die Verteilerleitung 121 und die Hauptspeiseleitung 125 mit der unter Hochdruck stehenden Kunststoffmasse, z.B. Polyäthylen, aufgefüllt, die an den Steigbügelkernenden fest anhaftet und zu Ankerhülsen 111 geformt wird. Nach dem Erstarren der Ankerhülsenmasse wird das Formwerkzeug 101 geöffnet und der mit den Ankerhülsen 111 versehene Steigbügelkern 108 entformt. Auch die in den Leitungen 121 und 125 verbleibenden Kunststoffpfropfen- bzw. - kerne und die Stopfen in den Verteilerleitungen 126, 127 zu der Gußkammer 123 des zweiten Werkzeugteils 106 werden entfernt.

Nunmehr wird der mit den Ankerhülsen 111 versehene Steigbügelkern 108 oder 110 in die Aufnahmekammer 122 und die Gußkammer 123 der unteren Gußformhälfte 103 eingelegt, während ein neuer Steigbügelkern 108 in der Gußkammer 112 und den Mitteln 116, 119 und 120 der unteren Gußformhälfte 103 angeordnet wird.

Der freie Steigbügelkern 108 und der bereits mit Ankerhülsen 111 versehene Steigbügelkern 110 werden spätestens durch das Schließen des Formwerkzeugs 101 in den entsprechenden Gußkammern 112 und 123 zentriert und während des Gießens in dieser Lage gehalten.

Beim anschließenden Gußvorgang werden gleichzeitig und mit gleichem Druck an dem einen Steigbügelkern 108 wieder zwei Ankerhülsen 110 aufgeformt, während am anderen Steigbügelkern 110, der bereits mit Ankerhülsen 111 versehen ist, der Mantel 124 aufgeformt wird, der an den hier kegelstumpfförmigen Verbindungsstellen mit den Ankerhülsen 111 an letzteren angeschmolzen wird, so daß eine kontinuierliche Umhüllung des Steigbügelkerns 110 mit Kunststoffmasse gewährleistet ist. Diese Ausführung bietet einen sicheren Schutz gegen eine Korrosion des Steigbügelkerns.

Nach dem Erstarren der Kunststoffmassen in den verschiedenen Gußkammern 112 und 123 wird der fertige und vollständig mit Kunststoffmasse überzogene Steigbügel aus dem zweiten Werkzeugteil 106 entnommen und zum Gebrauch bereitgestellt, während der im ersten Werkzeugteil 105 mit Ankerhülsen 111 versehene Steigbügelkern in die untere Gußformhälfte 103 des zweiten Werkzeugteils 106 eingelegt wird und im ersten Werkzeugteil wiederum ein freier Steigbügelkern 108 angeordnet wird.

Zwecks einfacher Anpassung des Formwerkzeuges 101 an verschiedene Längen des Quersteges 109 eines Steigbügelkerns 108 oder 110 können die obere (102) und die untere Gußformhälfte 103 jeweils außerhalb, d.h. zwischen den Gußkammern 112 in Längsrichtung parallel zu den Achsen dieser Kammern 112,122 und senkrecht zur Trennebene 104 unterteilt und mit Zwischen- bzw. Distanzstücken 128 versehen sein, so daß die äußerenTeile 129 bzw. 130 der Gußformhälften 102 und 103 jeweils eine Gußkammer 112 für die Ankerhülse 111, die dazu koaxialen Halte- bzw. Zentriermittel 116, eine Aufnahmekammer 122 und einen Schenkelabschnitt 123a der Gußkammer 123 aufweisen. Die verschiedenen Aussenteile 129, 130 und Distanzstücke 128, die entsprechend einem Teil der Querabschnitte 123b der Gußkammer 123 und zumindest Teile der Hauptspeiseleitung 125 und der Verteilerleitung 127 aufweisen, sind mittels Ankerbolzen fest miteinander verschraubt, die diese Teile 129 und 130 und die Distanzstücke 128 quer durchsetzen.

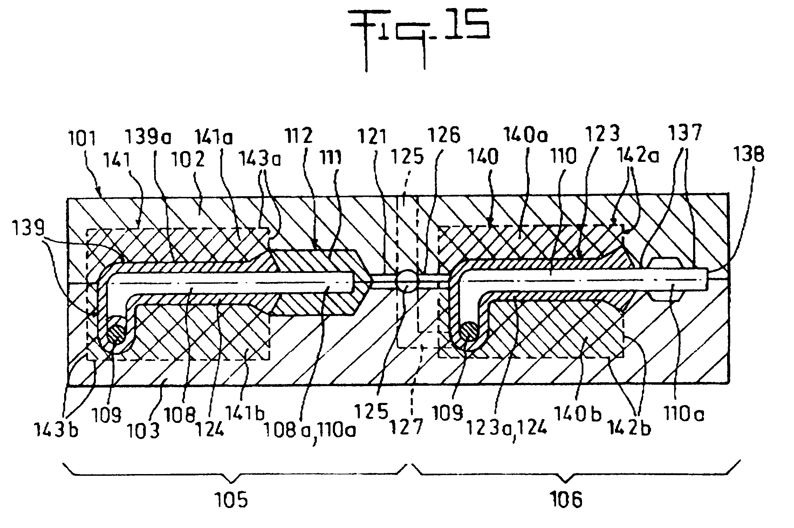

Das in den Figuren 13 und 14 dargestellte Ausführungsbeispiel eines Formwerkzeugs 101 ist zum Großteil mit dem Ausführungsbeispiel nach den Figuren 11 und 12 identisch. So findet man auch hier eine obere 102 und eine untere Gußformhälfte 103 und einen ersten Werkzeugteil 105 zum Druckgießen der Ankerhülsen 111, und Mittel 116 zum lagegerechten Halten des Steigbügelkerns 108 außerhalb der Gußkammer 112, sowie einen zweiten Werkzeugteil 106, mit der die Mittel zum lagegerechten Halten des Steigbügelkerns 110 bildenden Aufnahmekammer 122 für die Ankerhülse 111 und mit der U-förmigen Gußkammer 123 für den Mantel 124 sowie die entsprechenden Hauptspeise- (125) und Verteilerleitungen 121,126 und 127 zu den Gußkammern 112 und 123. Um weitere Wiederholungen zu vermeiden, sind funktionsgleiche bzw. ähnliche Teile in beiden Ausführungsbeispielen mit den gleichen Bezugsziffern versehen.

Ein wesentlicher Unterschied im Ausführungsbeispiel nach den Figuren 13 und 14 ist darin zu sehen, daß die beiden Gußkammern 112 für die Ankerhülsen 111 im ersten Werkzeugteil 105 in bezug auf letzteren und auf den zweiten Werkzeugteil 106 beweglich angeordnet sind und gleichzeitig als Aufnahmekammern 122, d.h. als Mittel zum lagerichtigen bzw. zentrierten Halten eines bereits mit Ankerhülsen 111 versehenen Steigbügelkerns 110 in der Gußkammer 123 des zweiten Werkzeugteils 106 dienen, und daß die beiden Aufnahmekammern 122 des zweiten Werkzeugteils 106 ebenfalls in bezug auf die beiden Gußformhälften 102 und 103 des Formwerkzeugs 101 und seiner Teile 105 und 106 beweglich angeordnet sind und auch als Gußkammern 112 für die Ankerhülsen 111 im ersten Werkzeugteil 105 dienen können, nachdem der rollständig mit Kunststoff überzogene Steigbügelkern 110, d.h. der fertige Steigbügel aus der Gußkammer 123 und den Aufnahmekammern 122 entnommen worden ist.

Die beiden Gußkammern 112 für die Ankerhülsen 111 bzw. die beiden Aufnahmekammern 122 für die Ankerhülsen 111, die bereits auf den Steigbügelkern 110 aufgeformt sind, bilden den wesentlichen Bestandteil einer bewegbaren Zusatzform 131 bzw. 132 mit z.B. rechteckförmigem Querschnitt senkrecht zur Trenn- und Schließebene 104 der beiden Gußformhälften 102 und 103 und parallel zu den Achsen der Guß- bzw. Aufnahmekammern 112 bzw. 122. Jede der beiden Zusatzformen 131 und 132 weist die gleichen Maße auf und besteht aus zwei übereinander angeordneten Zusatzformteilen 131a, 131b bzw. 132a,132b, die z.B. vorne an einer Querachse aneinander angelenkt sind und in die jeweils zwei im Abstand der Schenkel des Steigbügelkerns 108, 110 nebeneinander liegende Kammerhälften 112a, 112b bzw. 122a,122b und eine in den konischen Teil der Kammerhälfte 112a, 112b einmündende Verteilerleitungshälfte 133a, 133b eingearbeitet sind, die durch die entsprechenden Kammerhälften bzw. Verteilerleitungshälften des darüber oder darunter geordneten Zusatzformteils zur Gußkammer 112 mit Verteilerleitung 133 bzw. Aufnahmekammer 122 ergänz werden. Die untere Zusatzformhälfte bzw. -teil 131b bzw. 132b ist ohne Spiel in eine entsprechende Ausnehmung 134b bzw. 135b der unteren Gußformhälfte 103 des ersten 105 und zweiten Werkzeugteils 106 eingesetzt, und zwar derart, daß bei geschlossenen Zusatzformen 131 und 132 die Achse der Gußkammern 112 und der Aufnahmekammern 122 mit den entsprechenden Achsen der Mittel 116 bzw. der Schenkelabschnitte 123a der Gußkammer 123 für den Mantel 124 fluchten und die Schließ- Trennebene der Zusatzformteile 131a,131b bzw.132a, 132b mit der Schließebene 104 der Gußformhälften 102, 103 zusammenfällt.

Auch die obere Gußformhälfte 102 weist für den oberen Teil bzw. die obere Hälfte 131a, 132a der beiden beweglichen Zusatzformen 131 und 132 entsprechende Ausnehmungen 134a bzw. 135a auf, die bei geschlossenem Formwerkzeug 101 (siehe Fig.13) diese oberen Zusatzformhälften 131a, 132a ohne Spiel umfassen.

Die beiden Zusatzformen 131 und 132 stehen gegebenenfalls über die Längsseiten des Formwerkzeugs 101 geringfügig vor und weisen seitliche Führungsnasen 136 auf, die zum lagerichtigen Einsetzen derselben in die untere (103) bzw. obere Gußformhälfte 102 dienen. Die Abmessungen der Ausnehmungen 134a und 135a bzw. 134b und 135b sind einander gleich, da letztere die entsprechenden Zusatzformhälften 131a, 132a bzw. 131b, 132b gleicher Außenmaße aufnehmen.

Der Gußvorgang zur Herstellung eines vollständig mit Kunststoffmasse überzogenen Steigbügels erfolgt in ähnlicher Weise wie beim Ausführungsbeispiel nach den Figuren 11 und 12, jedoch mit dem Unterschied, daß nach dem Druckgießen der Ankerhülsen 111 am Steigbügelkern 108 letzterer nicht aus der Gußkammer 112 der Zusatzform 131 entformt wird, sondern, sobald die Ankerhülsenmasse erstarrt bzw. erhärtet ist, aus den beiden Gußformhälften 102 und 103 zusammen mit der Zusatzform 131 entnommen, dann bei geschlossener Zusatzform 131 zum zweiten Werkzeugteil 106 transportiert und dort automatisch lagerichtig in die untere Hälfte der Gußkammer 123 eingesetzt wird wobei die Zusatzform 131 mit Hilfe der Führungsnasen 136 lagerichtig in die entsprechende Querausnehmung 135b der unteren Gußformhälfte 103 eingelagert wird. Gleichzeitig wird im Bereich des ersten Werkzeugteils 105 ein neuer Steigbügelkern in die Gußkammer 112 einer neuen, bereits in der Querausnehmung 134b angeordneten Zusatzform und in die Mittel 116, 119 und 120 der unteren Gußformhälfte eingesetzt. Nach dem Schließen des Formwerkzeugs 101 liegen auch die Querausnehmungen 134a und 135a an den entsprechenden Zusatzformhälften 131a und 132a an, so daß mit einem neuen Gußvorgang wiederum die Ankerhülsen 111 auf den Steigbügelkern im ersten Werkzeugteil 105 und ein Mantel 124, der an die dort bereits vorhandenen Ankerhülsen angeschmolzen wird, an den Steigbügelkern 110 im zweiten Werkzeugteil 106 angeformt werden.

Nach dem Erstarren der Mantelmasse wird der vollständig und kontinuierlich mit Kunststoff umhüllte Steigbügel aus dem zweiten Werkzeugteil 106 und auch aus der Zusatzform 132 entnommen, die hier zum zentrierten und lagegerechten Halten des Steigbügelkerns 110 diente. Anschließend wird der Steigbügelkern 108 vom ersten Werkzeugteil 105 zusammen mit der entsprechenden geschlossenen Zusatzform 131 entformt und in die untere Gußformhälfte 103 des zweiten Werkzeugteils 106 eingesetzt, während eine freie Zusatzform in den ersten Werkzeugteil 105 bzw. dessen untere Gußformhälfte 103 zusammen mit einem neuen Steigbügelkern eingesetzt wird. Die vom fertig umhüllten Steigbügel abgenommene Zusatzform 132 kann gegebenenfalls mehr oder weniger stark abgekühlt werden, bevor sie erneut in den ersten Werkzeugteil 105 zwecks Bildung der beiden Gußkammern 112 für die Ankerhülsem 111 eingesetzt wird.

Durch die Verwendung der Zusatzformen 131 und 132 werden zwei Vorteile erreicht :
– die Ankerhülsen 111 brauchen nicht entformt und erneut in die Aufnahmekammern 122 eingelegt werden,
– die Zusatzformen 131 und 132 können auf dem Rückweg vom zweiten (106) zum ersten Werkzeugteil 105 zusätzlich abgekühlt werden, so daß die in die Gußkammern 112 eingepreßte Kunststoffmasse sehr rasch erstarrt.

Die Fig. 15 zeigt zwei weitere Varianten des Erfindungsgegenstandes, wobei die eine dem Ausführungsbeispiel nach den Figuren 11 und 12 und die andere Variante dem Ausführungsbeispiel nach den Figuren 13 und 14 entspricht.

Bei beiden Varianten wird beim zweiten Steigbügelkern 110 nach dessen Einlegen in die U-förmige Gußkammer 123 im zweiten Werkzeugteil 106 mit der Herstellung des Mantels 124 begonnen, während die Endbereiche 110a der Schenkel in entsprechenden Haltekammern 137 lagerichtig gehalten werden, deren Querschnittsform derjenigen der Endbereiche 110a der Schenkel des Steigbügelkerns 110 angepaßt ist, und zwar derart, daß der Steigbügelkern 110 in der U-förmigen Gußkammer 123 lagerichtig und zentriert gehalten werden kann. Zusätzlich besitzt die vordere Haltekammer 137 einen Anschlag 138 für das vordere Ende des Steigbügelkerns 110, und zwar derart, daß der Quersteg 109 des letzteren im Querschnitt der Gußkammer 123 zentriert ist. Durch das dichte Anliegen der Haltekammern 137 an den Schenkelenden 110a des Steigbügelkerns 110 ist die Gußkammer 123 auf dieser Seite dichtend abgeschlossen.

Andererseits weist in diesem Falle der erste Werkzeugteil jeweils eine Gußkammer 112 für jede der beiden auf die Schenkelenden 108a des Steigbügelkerns 108 bzw. 110 aufzuformenden Ankerhülsen 111 sowie eine sich dahinter anschließende U-förmige Aufnahme - kammer 139 auf, die in Form, Gestalt und Abmessung der U-förmigen gußkammer 123 entspricht und mit dem rückwärtigen Ende der Gußkammern 112 für die Ankerhülsen 111 in Verbindung steht.

Bei dieser Variante wird zuerst mit der Herstellung eines Mantels 124 an einem Steigbügelkern 110 begonnen, und zwar im zweiten Werkzeugteil 106, wonach der so ummantelte Steigbügelkern 110 in die Aufnahme-

EP 0 241 009 B1

kammer 139 und die Gußkammern 112 des ersten Werkzeugteils 105 eingebracht wird und im freigewordenen zweiten Werkzeugteil 106 ein neuer Steigbügelkern eingelegt wird. Die vorderen Enden des in der Aufnahmekammer 139 befindlichen Mantels 124 begrenzen dabei das rückwärtige Ende der Gußkammern 112 für die Ankerhülsen 111 und schließen diese Kammern 112 dichtend ab.

Nach dem Schließen des Formwerkzeugs 101 werden, wie bei den vorhergehenden Ausführungsbeispielen, die Gußkammern 112 und 123 über die Leitungen 125, 121, 126 und 127 mit einer unter Hochdruck stehenden Kunststoffmasse gefüllt, derart, daß nach deren Erstarren im ersten Werkzeugteil 105 ein vollständig umhüllter Steigbügel und im zweiten Werkzeugteil 106 ein mit einem Mantel 124 umhüllter Steigbügelkern erhalten wird.

Bei der anderen Variante ist sowohl die U-förmige Gußkammer 123 für den Mantel 124 als auch die U-förmige Ausnahmekammer 139, die in ihrer Dimensionierung der Gußkammer 123 entspricht, in jeweils einer zweiteiligen Zusatzform 140 bzw. 141 angeordnet, die in der Fig.15 mit Doppelschraffierung angedeutet ist. Diese zweiteiligen Zusatzformen 140 bzw. 140a, 140b und 141 bzw. 141a und 141b sind in entsprechend dimensionierten Querausnehmungen 142a, 143a bzw. 142b und 143b der oberen Gußformhälfte 102 bzw. der unteren Gußformhälfte 103 im zweiten Werkzeugteil 106 bzw. ersten Werkzeugteil 105 ohne seitliches Spiel eingelassen bzw. beweglich angeordnet. Auch hier bildet die Schließ- und Trennebene 104 die Symmetrieebene für die Schenkelabschnitte 123a bzw. 139a der Gußkammer 123 bzw. der Aufnahmekammer 139 bei geschlossenem Formwerkzeug 101.

Das mit dieser Variante durchführbare Verfahren verläuft analog zur ersten Variante und zum Ausführungsbeispiel nach den Figuren 13 und 14 im Hinblick auf den Transport des ummantelten Steigbügelkerns 110 mit Hilfe der geschlossenen Zusatzform 140 vom zweiten Werkzeugteil 106 in den ersten Werkzeugteil 105.

**Patentansprüche**

1. Verfahren zum Herstellen eines in Mauerwerk einsetzbaren, U-förmigen Steigbügels (9), der einen entsprechend geformten, zwei parallele Schenkel (13, 107) und einen diese verbindenden Quersteg (15, 109) aufweisenden metallischen Steigbügelkern (10, 108, 110) enthält, der in seiner vorgegeben geometrischen Form in ein Formwerkzeug (33, 101) eingelegt und darin zentrisch und axial gehalten wird und auf dessen Schenkeln (13, 107) zwei an ihren freien Enden geschlossene Ankerhülsen (17, 18, 111) und auf dessen dazwischen liegenden Abschnitt ein Mantel (23, 124) angeordnet sind, die aus Kunststoff bestehen und von denen mindestens ein Teil durch Druckgießen des Kunststoffs gebildet wird, wobei der Mantel (23, 124) an die Ankerhülsen (17, 18, 111) angeformt ist, so daß der Steigbügelkern (10, 108, 110) von einer kontinuierlich zusammenhängenden dichten Kunststoffschicht ungeben ist, dadurch gekennzeichnet, daß

a) die Kunststoffschicht in zwei Verfahrensschritten aufgebracht wird, wobei entweder

a1) in einer ersten Schritt auf den freien Schenkelenden des Steigbügelkerns (10, 108, 110) die Ankerhülsen (17, 18, 111) in festem Zustand oder durch Druckgießen und in einem zweiten Schritt auf die dazwischen liegende Teillänge des Steigbügelkerns der Mantel (23, 124) durch Druckgießen aufgebracht werden, oder

a2) in einem ersten Schritt auf einer Teillänge des Steigbügelkerns (10, 108, 110) unter Freilassung der Schenkelenden der Mantel (23, 124) und in einem zweiten Schritt auf den Schenkelenden die Ankerhülsen (18, 111) durch Druckgießen aufgebracht werden, und daß

b) der jeweils im ersten Schritt aufgebrachte Teil der Kunststoffschicht in Verbindung mit Haltemitteln 49, 67, 122, 140 und 141) für die Zentrierung und axiale Ausrichtung der zunächst noch unbeschichteten Teillänge(n) des Steigbügelkerns (10, 108, 110) in der für den zweitene Schritt vorgesehenen Gußkammer (32, 112, 123) eines Formwerkzeugs (33, 101) herangezogen wird.

2. Verfahren nach Anspruch 1, dadurch gekennzeichnet, daß bei einem Steigbügel (9) bei dem sowohl die Ankerhülsen (18, 111) als auch der mantel (23, 124) durch Druckgießen hergestellt werden, der Kern (10, 108, 110) beim ersten Verfahrensschritt durch Haltemittel (59, 115, 116, 137) in einer konzentrischen Lage zu der Gußkammer (32) bzw. den Gußkammern (112, 123) gehalten wird, in der bzw. in denen der erste Teil der Kunststoffschicht aufgespritzt wird.

3. Verfahren nach Anspruch 1, bei dem vorgeformte Ankerhülsen (17) verwendet werden, dadurch gekennzeichnet, daß die auf die Schenkelenden des Kerns (10) aufgesetzten, im Spritzgußverfahren vorgeformten Ankerhülsen (17) im Bereich ihrer Aufnahmeöffnungen (19) eine Ringlippe (25) mit einer zylindrischen Innenseite aufweisen, die gegenüber der besagten Aufnahmeöffnung im Durchmesser vergrößert ist und mit dem zugehörigen Schenkel (13) eine ringförmige Aufnahmetasche (27) bildet, und deren Außenseite (29) zum Lippenende konisch nach innen verjüngt ist und mit der Innenwand der Gußkammer (32) einen Ringraum (30) begrenzt, und daß während des Gußvorgangs sowohl in die Aufnahmetasche (27) als auch in den Ringraum

**11**

(30) geschmolzenes Kunststoffmaterial eingebracht wird.

4. Verfahren nach einem der Ansprüche 1 bis 3, <u>dadurch gekennzeichnet</u>, daß der Steigbügelkern (10, 13) während des ersten Gußvorgangs durch eine obere Auswurfeinrichtung (59) gehalten wird, die in der Haltestellung (59a) die Schenkel (13) dichtend umfaßt und gleichzeitig den unteren Bereich (63) der Gußkammer (32) abdichtet und in Ruhestellung mit der Innenseite der Gußkammer fluchtet.

5. Verfahren nach einem der Ansprüche 1 bis 4, <u>dadurch gekennzeichnet</u>, daß die Ankerhülsen (18) des Steigbügelkerns (10) während des zweiten Gußvorgangs durch eine untere Auswurfeinrichtung (67) gehalten werden, die in der Ruhestellung mit der glatten Innenseite des unteren Bereichs (63) der Gußkammer (32) fluchtet.

6. Verfahren nach einem der Ansprüche 1 bis 5, <u>dadurch gekennzeichnet</u>, daß während ein und desselben Gußvorgangs gleichzeitig zwei Steigbügelkerne (108, 110) mit Kunststoffmaterial umhüllt werden, derart, daß die Ankerhülsen (111) um die freien Schenkelenden (108a) eines ersten Steigbügelkerns und der Kunststoffmantel (124) un den freien Restteil eines bereits mit Ankerhülsen (111) versehenen zweiten Steigbügelkerns (110) gegossen werden und daß dabei der erste Steigbügelkern (108) außerhalb der Gußkammern (112) für die Ankerhülsen (111) und der zweite Steigbügelkern (110) im Bereich (122) der bereits aufgeformten und erstarrten Ankerhülsen (111) in den entsprechenden Gußkammern (112 bzw. 123) eines Formwerkzeugs (101) zentriert gehalten werden.

7. Verfahren nach einem der Ansprüche 1 bis 5, <u>dadurch gekennnzeichnet</u>, daß während ein und desselben Gußvorganges gleichzeitg zwei Steigbügelkerne (108, 110) mit Kunststoffmaterial umhüllt werden, derart, daß die Ankerhülsen (111) um die freien Schenkelenden (108a) eines bereits mit einem Kunststoffmantel (124) versehenen ersten Steigbügelkerns (108) und ein Kunststoffmantel (124) um den ensprechenden Teil eines zweiten Steigbügelkerns (110) gegossen werden und daß dabei der erste Steigbügelkern (108) im Bereich (139) des bereits aufgeformten und erstarrten Mantels (124) und der zweite Steigbügelkern (110) außerhalb der Gußkammer (123) für den Mantel (124) im Bereich (137) der Schenkelenden (110a) in den entsprechenden Gußkarmmern (112 bzw. 123) eines Formwerkzeugs (101) zentriert gehalten werden.

8. Verfahren nach einem der Ansprüche 1 bis 7, <u>dadurch gekennzeichnet</u>, daß für das Gießen der beiden Ankerhülsen (111) eines Steigbügelkerns (108) eine gegenüber den Haltemitteln (116, 119, 120) für den Steigbügelkern (108) bewegliche Zusatzform (131, 132) vorgesehen ist, in der die Gußkammern (112) für die Ankerhülsen (111) angeordnet sind, und daß die Zusatzform (131, 132) anschließend an den Gußvorgang der Ankerhülsen (111) und deren Erstarren zum Transport des Steigbügelkerns (108) in die Gußkammer (123) für den Kunststoffmantel (124) und zum lagerichtigen Halten des Steigbügelkerns (108) während des Gußvorganges für den Mantel (124) verwendet wird.

9. Verfahren nach einen der Ansprüche 1 bis 7, <u>dadurch gekennzeichnet</u>, daß für das Gießen des Kunststoffmantels (124) eines Steigbügelkerns (110) eine gegenüber den Haltermitteln (137, 138) für die Schenkelenden (110a) bewegliche Zusatzform (140, 141) vorgesehen ist, die anschließend an den Gußvorgang des Kunststoffmantels (124) und dessen Erstarren zum Transport des Steigbügelkerns (110) in die Gußkammer (112) für die Ankerhülsen (111) und zum lagerichtigen Halten des Steigbügelkerns (110) während des Gußvorganges für die Ankerhülsen verwendet wird.

10. Verfahren nach einem der Ansprüche 1 bis 9, <u>dadurch gekennzeichnet</u>, daß die Gußkammern (112) für die Ankerhülsen (111) eines ersten Steigbügelkerns (108) und die Gußkammer (123) für den Mantel (124) eines zweiten Steigbügelkerns (110) gleichzeitig mit dem gleichen Kunststoffmaterial und mit gleichem Druck beaufschlagt werden.

11. Verfahren nach einem der Ansprüche 1 bis 10, <u>dadurch gekennzeichnet</u>, daß zwei Steigbügelkerne (108, 110) hintereinander angeordnet werden und daß die Gußkammer (123) für den Mantelteil (124) des zweiten Steigbügelkerns (110) von dessen Quersteg (109) aus und die Gußkammern (112) für die Ankerhülsen des ersten Steigbügelkerns (108) von den Spitzen der Ankerhülsen aus mit flüssigem thermoplastischem Kunststoffmaterial beaufschlagt werden.

12. Formwerkzeug (33) für die Durchführung des Verfahrens nach Anspruch 1 mit zwei in der Schenkelebene mindestens einer Gußkammer (32) für den Steigbügelkern (10) trennbaren Formhälften (35/37), die zumindest eine Gußkammer für den Mantelteil (23) des Steigbügelkerns und Mittel zum lagerichtigen Halten des Steigbügelkerns in der Gußkammer sowie mindestens eine Verbindungsleitung zum Anschluß der Gußkammer an eine Kunststoffpresse aufweisen, <u>dadurch gekennzeichnet</u>, daß das Formwerkzeug (33) zum vollständigen Umhüllen des Steigbügelkerns (10) mit Kunststoffmaterial aus zwei Formhälften (35,37) besteht, von denen die eine For!hälfte (35) Abwurfkörper (41) aufweist, die mit zwei Aufnahmebohrungen (39) für bereits vorgeformte Ankerhülsen (17) versehen sind, senkrecht zur Achse der Aufnahmebohrungen (39) gegenüber der Formhälfte (35) zwischen einer Gußstellung und einer Abwurfstellung verschiebbar angeordnet sind und deren über die eine Formhälfte (35) hervorragender Kopfteil in eine entsprechenden Ausnehmung der zweiten Formhälfte (37) einführbar sind, wobei die Gußkammerhälften (32a, 32b) jeweils in der einen (35) und der anderen Formhälfte (37), bei geschlossenem Formwerkzeug (33) in der Verlängerung der Aufnahmebohrungen (39), angeordnet sind und die den Steigbügelkern (10, 13) mit Abstand umgebende Gußkammer (32) bilden und in den den Aufnahmebohrungen (39) benachbarten Bereichen einen Lagerbereich für die freien Enden der Ankerhülsen (17) bilden und zumindest je einen in Richtung auf die Achse der Gußkammer (32) radial nach innen gerichteten Dichtungsring bzw. -vorsprung (49, 49a, 49b) aufweisen, der in Schließstellung des Formwerkzeugs (33) dichtend an der entsprechenden Ankerhülse (17) anliegt und die Mittel zum zentrierten Halten des Steigbügelkerns (10, 13) innerhalb der Gußkammer (32) bildet.

13. Formwerkzeug nach Anspruch 12, dadurch gekennzeichnet, daß die Gußkammer (32) den gesamten Steigbügelkern (10, 13) umgibt, daß angrenzend an den Gußkammerbereich (63) für die Ankerhülsen (18) Mittel (59) zum zentrierten Halten des Steigbügelkerns (10, 13) angeordnet sind, die gleichzeitig den Bereich (63) abdichten und einen Teil des Gußkammerbereichs (69) für den Mantel (23) des Steigbügelkerns (10, 13) bilden, und daß im Gußkammerbereich (63) für die Ankerhülsen (18) Mittel zum Festhalten des Steigbügelkerns (10, 13) angeordnet sind, die in der einen Stellung mit der ebenen Wand des Gußkammerbereichs (63) fluchten und in der anderen Stellung an den Ankerhülsen (18) angreifen und den Steigbügelkern (10, 13) im anderen Gukammerbereich (69) zentriert halten.

14. Formwerkzeug (101) für die Durchführung des Verfahrens nach Anspruch 1 mit zwei in der Schenkelebene mindestens einer Gußkammer (112, 123) für den Steigbügelkern (108, 110) trennbaren Formhälften (102, 103), die zumindest eine Gußkammer (123) für den Mantelteil (124) des Steigbügelkerns und Mittel zum lagerichtigen Halten des Steigbügelkerns in der Gußkammer sowie mindestens eine Verbindungsleitung zum Anschluß der Gußkammer an eine Kunststoffpresse aufweisen, dadurch gekennzeichnet, daß das Formwerkzeug (101) zum vollständigen Umhüllen des Steigbügelkerns (108, 110) mit Kunststoffmaterial aus zwei Teilen (105, 106) besteht, von denen der eine Formwerkzeugteil (105) die Gußkammern (112) für die Ankerhülsen (111) und außerhalb dieser Gußkammern (112) angeordnete Mittel (116, 119, 120; 139) zum lagerichtigen Halten des Steigbügelkerns gegenüber diesen Gußkammern (112), und der andere Formwerkzeugteil (106) die Gußkammer (123) für den zwischen den Ankerhülsen (111) liegenden Mantelteil (124) und außerhalb dieser Gußkammer (123) angeordnete Mittel (122, 137, 138) zum lagerichtigen Halten des Steigbügelkerns (108, 110) in dieser Gußkammer (123) aufweist, und daß die Gußkammern beider Formwerkzeugteile (105, 106) sich in der Länge zu einer den gesamten Steigbügelkern ungebenden Gußkammer ergänzen, jedoch nicht unmittelbar aneinander anschließen.

15. Formwerkzeug nach Anspruch 14, dadurch gekennzeichnet, daß die beiden Formwerkzeugteile (105, 106) miteinander zu einer Einheit verbunden sind.

16. Formwerkzeug nach einem der Ansprüche 14 und 15, dadurch gekennzeichnet, daß die Mittel (116, 137) zum lagerichtigen Halten des Steigbügelkerns (108, 110) in der benachbarten Gußkammer (112, 123) im Querschnitt dem Querschnitt des Steigbügelkerns (108, 110) angepaßt sind und diese Gußkammer im Zusammenwirken mit dem Steigbügelkern dichtend abschließen.

17. Formwerkzeug nach einem der Ansprüche 14 und 15, dadurch gekennzeichnet, daß die Mittel zum lagerichtigen Halten des Steigbügelkerns (108, 110) jeweils aus einer Aufnahmekammer (139) für den am Steigbügelkern (108) angeformten Mantel (124) oder aus je einer Aufnahmekammer (122) für eine der beiden auf den Steigbügelkern (110) aufgeformten Ankerhülsen (111) bestehen und daß das der Gußkammer (112) für die Ankerhülsen (111) benachbarte Ende des Mantels (124) diese Gußkammer dichtend abschließt und das der Gußkammer (123) für den Mantel (124) benachbarte Ende einer Ankerhülse (111) diese Gußkammer (123) dichtend abschließt.

18. Formwerkzeug nach Anspruch 17, dadurch gekennzeichnet, daß die beiden Gußkammern (112) für die Ankerhülsen (111) in einer gegenüber den beiden Formwerkzeugteilen (105, 106) bewegbaren Zusatzform (131, 132) angeordnet sind und beim Einsetzen dieser Zusatzform (131, 132) in den zweiten Formwerkzeugteil (106) als Aufnahmekammern (122) und Mittel zum lagerichtigen Halten eines bereits mit Ankerhülsen (111) versehenen Steigbügelkerns (110) in der Gußkammer (123) des zweiten Formwerkzeugteils (106) dienen und daß die beiden Aufnahmekammern (122) ebenfalls in einer gegenüber den beiden Formwerkzeugteilen (105, 106) bewegbaren Zusatzform (132, 131) angeordnet sind und beim Einsetzen dieser Zusatzform (132, 131) in den ersten Formwerkzeugteil (105) als Gußkammern (112) für die Ankerhülsen (111) eines Steigbügelkerns (108) dienen, derart, daß beiden Zusatzformen (131, 132) funktionsmäßig gegeneinander austauschbar sind.

19. Formwerkzeug nach Anspruch 17, dadurch gekennzeichnet, daß sowohl die U-förmige Gußkammer (123) für den Mantel (124) als auch die U-förmige Aufnahmekarner (139) für den Mantel in je einer gegenüber den beiden Formwerkzeugteilen (105, 106) bewegbaren und in diese einsetzbaren Zusatzform (140, 141) angeordnet sind, derart, daß beide Zusatzformen (149, 141) funktionsmäßig gegeneinander austauschbar sind.

20. Formwerkzeug nach einem der Ansprüche 14 bis 19, dadurch gekennzeichnet, daß die obere (102) und die untere Gußformhälfte (103) zwischen den Gußkammern (112) für die Ankerhülsen (111) bzw. den Aufnahmekammern (122) in Längsrichtung unterteilt und mit mindestens einem Distanzstück (128) versehen sind,

13

derart, daß die äußeren Teile (129, 130) der Gußformhälften (102, 103) jeweils eine Gußkammer (112), die entsprechenden Haltemittel (116), eine Aufnahmekammer (122) und zumindest einen Schenkelabschnitt (123a) der Gußkammer (123) aufweisen.

**Claims**

1. Method for the manufacture of a U-shaped climbing step (9) for insertion into brickwork, comprising a respectively formed metallic climbing-step core (1∅, 1∅8, 11∅) having two parallel shanks (13, 1∅7) with connecting cross bars (15, 1∅9), which is placed in its specified geometric form into a forming tool (33, 1∅1), centrically and axially held therein, and with two anchoring sleeves (17, 18, 111), which are sealed at their ends, arranged on its shanks (13, 1∅7), and with a casing (23, 124) arranged in the region thereinbetween, and which are made of plastics material of which at least part is made by pressure-casting the plastics material, in which respect the casing (23, 124) is formed onto the anchoring sleeves (17, 18, 111), so that the climbing-step core (1∅, 1∅8, 11∅) is encased in a continuously joined dense layer of plastics material, **characterised in that**
   a) the plastics material layer is applied in two procedural stages, whereby either
      a1) in a first stage the anchoring sleeves (17, 18, 111) are applied to the free ends of the shanks of the climbing-step core (1∅, 1∅8, 11∅) in a solid state or by pressure-casting, and in a second stage the casing (23, 124) is applied to the partial length thereinbetween of the climbing-step core (23, 124) by pressure-casting; or
      a2) in a first stage the casing (23, 124) is applied to a partial length of the climbing-step core (1∅, 1∅8, 11∅) whilst keeping the ends of the shanks free, and in a second stage the anchoring sleeves (18, 111) are applied to the shank ends by pressure-casting, and that
   b) the portion of the plastics material layer applied in the first stage is used in conjunction with holding means (49, 67, 122, 14b and 141) for centring and axially aligning the initially still uncoated partial length(s) of the climbing-step core (1∅, 1∅8, 11∅) in the casting chamber (32, 112, 123) of a forming tool (33, 1∅1) provided for the second stage.

2. Method according to claim 1, **characterised in that** the core (1∅, 1∅8, 11∅) of the climbing step (9), with both its anchoring sleeves (18, 111) and the casing (23, 24) having been produced by pressure-casting, is held in the first procedural stage by holding means (59, 115, 116, 137) in a concentric position to the casting chamber (32) or to the casting chambers (112, 123) respectively in which the first portion of the plastics material layer is applied.

3. Method according to claim 1, using pre-formed anchoring sleeves (17), **characterised in that** the anchoring sleeves (17), which are placed on the shank ends of the core (1∅) and have been pre-formed in the injection-moulding process, have in the region of their receiving apertures (19) an annular lip (25) with a cylindrical inside which is diametrically enlarged relative to the receiving aperture and which, together with the associated shank (13), forms an annularly shaped receiving pocket (27), and the outside (29) of which narrows conically inwards towards the end of the lip and defines, together with the inside wall of the casting chamber (32), an annular space (3∅), and that molten plastics material is delivered during the casting process both into the receiving pocket (27) and into the annular space (3∅).

4. Method according to one of the claims 1 to 3, **characterised in that** the climbing-step core (1∅, 13) is held during the first casting process by an upper ejection device (59), which, whilst in its holding position (59a), sealingly embraces the shanks (13) and simultaneously seals the lower region (63) of the casting chamber (32), and which is flush with the inside of the casting chamber whilst in the inoperative position.

5. Method according to one of the claims 1 to 4, **characterised in that** the anchoring sleeves (18) of the climbing-step core (1∅) are held during the second casting stage by a lower ejection device (67), which is flush with the smooth inside of the lower region (63) of the casting chamber (32) whilst in the inoperative position.

6. Method according to one of claims 1 to 5, **characterised in that** during one and the same casting process, two climbing-step cores (1∅8, 11∅) are simultaneously encased in plastics material so that the anchoring sleeves (111) are cast around the free shank ends (1∅8a) of a first climbing-step core, and the plastics material casing (124) is cast around the free remaining portion of a second climbing-step core (11) which has previously been fitted with anchoring sleeves (11), and that thereby the first climbing-step core (1∅8) is held centred outside the casting chambers (112) for the anchoring sleeves (111), and the second climbing-step core (11∅) is held centred in the region (122) of the previously formed and hardened anchoring sleeves (111) in the respective casting chambers (112 or 123 respectively) of a forming tool (1∅1).

7. Method according to one of claims 1 to 5, **characterised in that** two climbing-step cores (1∅8, 11∅) are simultaneously encased in plastics material in one and the same casting process, so that the anchoring sleeves (111) are cast around the free shank ends (1∅8a) of a first climbing-step core (1∅8), which had previously been provided with a plastics material casing (124), and that a plastics material casing (124) is cast around the respective portion of a second climbing-step core (110), and that during this period the first climbing-step core (108) is centricallyh held in the region (139) of the previously formed-on and hardened casing (124), and the second climbing-step core (110) is centrically held outside the casting chamber (123) for the casing (124) in the region (137) of the shank ends (110a) in the respective casting chambers (112 or 123) of a forming tool (101).

8. Method according to one of claims 1 to 7, **characterised in that** a supplementary form (131, 132), which is movable relative to the holding means (116, 119, 120) for the climbing-step core (108) and in which the casting chambers (112) for the anchoring sleeves (111) are accommodated, is provided for casting both anchoring sleeves (111) of a climbing-step core (108), and in that after casting and hardening the anchoring sleeves ( 111 ), the supplementary form (131, 132) is used for transporting the climbing-step core (108) into the casting chamber (123) for the plastics- material casing (124) and for holding the climbing-step core (108) in the correct position during the casting of the casing (124).

9. Method according to one of claims 1 to 7, **characterised in that** a supplementary form (140, 141), which is movable relative to the holding means (137, 138) for the shank ends (110a), is provided for casting the plastics-material casing (124) of a climbing-step core (110), and is used after casting and hardening of the plastics-material casing (124) for transporting the climbing-step core (110) into the casting chamber (112) for the anchoring sleeves (111) and for holding the climbing-step core (110) in the correct position during casting of the anchoring sleeves.

10. Method according to one of claims 1 to 9, **characterised in that** the casting chambers (112) for the anchoring sleeves (111) of a first climbing-step core (108) and the casting chamber (123) for the casing (124) of a second climbing-step core (110) are simultaneously charged with the same plastics material and at equal pressure.

11. Method according to one of claims 1 to 10, **characterised in that** two climbing-step cores (108, 110) are arranged one behind the other, and that the casting chamber (123) for the casing portion (124) of the second climbing-step core (110) is charged from its crossbar (109) onwards, and the casting chambers (112) for the anchoring sleeves of the first climbing-step core (108) are charged from the tips of the anchoring sleeves with liquid thermo-plastic plastics material.

12. Forming tool (33) for carrying out the method according to claim 1, having two form halves (35/37) which are separable in the shank plane of at least one casting chamber (32) for the climbing-step core (10), which halves comprise at least one casting chamber for the casing portion (23) of the climbing-step core and means for holding the climbing-step core in the correct position within the casting chamber as well as at least one connecting pipe to connect the casting chamber to a plastics-material press, **characterised in that** the forming tool (33) comprises two form halves (35, 37) for complete encasement of the climbing-step core (10) with plastics material, of which the one form half (35) includes rejecting bodies (41), which are provided with two receiving bores (39) for previously pre-formed anchoring sleeves (17), arranged so as to be displaceable vertically to the axis of the receiving bores (39) relative to the form half (35) between a casting position and an ejecting position (Figure 7), and with the head portion, which extends beyond the one form half (35), being insertable into a respective recess of the second form half (37), in which respect the cast-chamber halves (32a, 32b) are arranged in the respective one form half (35) or the other (37), or in the extension of the receiving bores (39) when the forming tool (33) is closed, and form the casting chamber (32) which encases the climbing-step core (10, 13) at a distance, and in which the regions adjacent to the receiving bores (39) form a mounting region for the free ends of the anchoring sleeves (17), having at least one respective sealing ring or sealing protrusion respectively (49, 49a, 49b) oriented radially inwards in the direction of the axis of the casting chamber (32), which in the closing position of the forming tool (33) sealingly abuts the respective anchorina sleeve (17), forming the means for centred holding of the climbing-step core (10, 13) within the casting chamber (32).

13. Forming tool according to claim 12, **characterised in that** the casting chamber (32) encases the entire climbing-step core (10, 13), that adjacent to the casting-chamber region (63) for the anchoring sleeves (18) means (59) are arranged for centred holding of the climbing-step core (10, 13) whilst at the same time sealing the region (63) and forming part of the casting-chamber region (69) for the casing (23) of the climbing-step core (10, 13), and that in the casting-chamber region (63) for the anchoring sleeves (18) means for holding the climbing-step core (10, 13) are arranged so as to be flush with the plane wall of the casting-chamber region (63) in the one position, and to engage the anchoring sleeves (18) in the other position and to centrically hold the climbing-step core (10, 13) in the other casting-chamber region (69).

14. Forming tool (101) for carrying out the method according to claim 1, having two form halves (102, 103) which are separable in the shank plane of at least one casting chamber (112, 123) for the climbing-step core (108, 110), which halves comprise at least one casting chamber (123) for the casing portion (124) of the climbing-step core and means for holding the climbing-step core in the correct position within the casting chamber as well as at least one connecting pipe to the connect the casting chamber to a plastics-material press, **characterised in that** the forming tool (1Ø1) comprises two parts (1Ø5, 1Ø6) for complete encasement of the climbing-step core (1Ø8, 11Ø) with plastics material, of which the one forming-tool portion (1Ø5) comprises the casting chambers (112) for the anchoring sleeves (111) and outside these casting chambers (112) means (116, 119, 12Ø; 139) arranged for holding the climbing-step core in the correct position relative to these casting chambers (112), and the other forming-tool portion (1Ø6) comprises the casting chamber (123) for the casing portion (124), which is located between the anchoring sleeves (111), and outside this casting chamber (123) means (122, 137, 138) arranged for holding the climbing-step core (1Ø8, 11Ø) in the correct position within this casting chamber (123), and that the casting chambers of both forming-tool portions (1Ø5, 1Ø6) longitudinally join to form a casting chamber which encases the entire climbing-step core, however, without directly abutting.

15. Forming tool according to claim 14, **characterised in that** both forming-tool portions (1Ø5, 1Ø6) are interconnected into one unit.

16. Forming tool according to one of claims 14 and 15, **characterised in that** the means (116, 137) for holding the climbing-step core (1Ø8, 11Ø) in the correct position in the adjacent casting chamber (112, 123) are cross-sectionally matched with the cross-section of the climbing-step core (1Ø8, 11Ø), and that they sealingly close this casting chamber in conjunction with the climbing-step core.

17. Forming tool according to one of claims 14 and 15, **characterised in that** the means for holding the climbing-step core (1Ø8, 11Ø) in the correct position are composed of a respective receiving chamber (139) for the casing (124) which has been formed on the climbing-step core (1Ø8), or of a respective receiving chamber (122) for one or both of the anchoring sleeves (111) which has/have been formed on the climbing-step core (11Ø), and that the end of the casing (124) adjacent to the casting chamber (112) for the anchoring sleeves (111) sealingly closes this casting chamber, and that the end of an anchoring sleeve (111) adjacent to the casting chamber (123) for the casing (124) sealingly closes this casting chamber (123).

18. Forming tool according to claim 17, **characterised in that** both casting chambers (112) for the anchoring sleeves (111) are arranged in a supplementary form (131, 132), which is movable relative to both forming-tool portions (1Ø5, 1Ø6), and that they serve, on insertion of this supplementary form (131, 132) in the second forming-tool portion (1Ø6), as receiving chambers (122) and a means for holding a climbing-step core (11Ø), which has previously been fitted with anchoring sleeves (111) in the correct position in the casting chamber (123) of the second forming-tool portion (1Ø6), and that both receiving chambers (122) are also arranged on a supplementary form (132, 131), which is also movable relative to both forming-tool portions (1Ø5, 1Ø6), and serve on insertion of this supplementary form (132, 131) into the first forming-tool portion (1Ø5) as casting chambers (112) for the anchoring sleeves (111) of a climbing-step core (1Ø8) in such a manner that both supplementary forms (131, 132) are functionally interchangeable.

19. Forming tool according to claim 17, **characterised in that** both the U-shaped casting chamber (123) for the casing (124) and the U-shaped receiving chamber (139) for the casing are arranged in a respective supplementary form (14Ø, 141), which is movable relative to both forming-tool portions ( 1Ø5, 1Ø6) and insertable therein, in such a manner that both supplementary forms (149, 141 ) are functionally interchangeable.

2Ø. Forming tool according to one of claims 14 to 19, **characterised in that** the upper (1Ø2) and the lower casting-form half (1Ø3) are longitudinally divided between the casting chambers (112) for the anchoring sleeves (111) or the receiving chambers (122) respectively and provided with at least one spacer (128), so that the outer portions (129, 13Ø) of the casting-form halves (1Ø2, 1Ø3) comprise a respective casting chamber ( 112), respective holding means (116), a lreceiving chamber (122) and at least one shank section (123a) of the casting chamber (123).

## Revendications

1. Procédé pour fabriquer un échelon (9) en forme de U, pouvant être encastré dans un ouvrage de maçonnerie, qui comprend un noyau d'échelon métallique (10, 108, 110) de configuration correspondante, qui présente deux branches parallèles (13, 107) et une barre transversale (15, 109) reliant ces branches, ce noyau étant disposé, dans sa forme géométrique prédéterminée, dans un outil de moulage (33, 101) et maintenu axialement et en position centrée dans cet outil, et sur les branches (13, 107) duquel sont disposées deux chevilles d'ancrage (17, 18, 111) fermées à leur extrémité, tandis que, sur le segment situé entre les chevilles, est disposée une gaine (23, 124), les chevilles et la gaine étant composées de matière plastique, et au moins une partie de ces chevilles et de cette gaine étant formée par coulée sous pression de la matière plastique, la gaine (23, 124) étant réunie aux chevilles d'ancrage (17, 18, 111) par le moulage, de sorte que le noyau d'échelon (10, 108, 110) est enveloppé d'une couche de matière plastique étanche, qui est d'un seul tenant et continue, caractérisé en ce que

a) la couche de matière plastique est déposée en deux phases de procédé, et pour cela

a1) soit on forme les chevilles d'ancrage (17, 18, 111) sur les extrémités libres des branches du noyau d'échelon 10, 108, 111), à l'état solide ou par coulée par compression, dans une première phase, et on forme la gaine (23, 124) sur la longueur partielle du noyau de l'échelon située entre les chevilles, par coulée sous pression, dans une deuxième phase,

a2) soit on forme la gaine (23, 124) sur une longueur partielle du noyau d'échelon (10, 108, 110), en laissant libres les extrémités des branches, dans une première phase, et on forme les chevilles d'ancrage (18, 111) sur les extrémités des branches, par coulée sous pression, dans une deuxième phase, et en ce que

b) on utilise la partie de la couche de matière plastique qui a été déposée dans la première phase, en combinaison avec des moyens de maintien (49, 122, 140 et 141) pour assurer le centrage et l'alignement axial de la ou des longueurs partielles du noyau d'échelon (10, 108, 110) qui sont initialement encore non revêtus, dans la chambre de coulée (32, 112, 123) d'un outil de moulage (33, 101) qui est prévue pour la deuxième phase.

2. Procédé selon la revendication 1, caractérisé en ce que, dans le cas d'un échelon (9) dans lequel aussi bien les chevilles d'ancrage (18, 111) que la gaine (23, 124) sont produites par coulée sous pression, le noyau (10, 108, 110) est tenu, dans la première phase du procédé, par des moyens de maintien (59, 115, 116, 137) dans une position concentrique à la chambre de coulée (32) ou aux chambres de coulée (112, 113), dans laquelle ou lesquelles la première partie de la couche de matière plastique est injectée.

3. Procédé selon la revendication 1, dans lequel on utilise des chevilles d'ancrage (17) préformées, caractérisé en ce que les chevilles d'ancrage (17) emmanchées sur les extrémités des branches du noyau (10), et qui ont été préformées par le procédé de coulée par injection, présentent dans la région de leurs ouvertures réceptrices (19), une lèvre annulaire (25) munie d'une face interne cylindrique, qui est agrandie en diamètre par rapport à ladite ouverture réceptrice, et forme avec la branche (13) correspondante, une poche réceptrice annulaire (27), et dont la face extérieure (29) se rétrécit en cône vers l'intérieur, vers l'extrémité de la lèvre, et délimite un espace annulaire (30) avec la paroi interne de la chambre de coulée (32), et en ce que, pendant l'opération de coulée, de la matière plastique fondue est introduite aussi bien dans la poche réceptrice (27) que dans l'espace annulaire (30).

4. Procédé selon une des revendications 1 à 3, caractérisé en ce que, pendant la première opération de coulée, le noyau d'échelon (10, 13) est tenu par un dispositif d'éjection supérieur (59) qui entoure les branches (13) à joint étanche dans la position de maintien (59a) et, en même temps, obture à joint étanche la région inférieure (63) de la chambre de coulée (32) et est dans l'alignement de la face intérieure de la chambre de coulée dans la position de repos.

5. Procédé selon une des revendications 1 à 4, caractérisé en ce que les chevilles d'ancrage (18) du noyau d'échelon (10) sont tenues pendant la deuxième opération de coulée par un dispositif d'éjection inférieur (67) qui, dans la position de repos, est aligné sur la surface intérieure lisse de la région inférieure (63) de la chambre de coulée (32).

6. Procédé selon une des revendications 1 à 5, caractérisé en ce que pendant une seule et même opération de coulée, deux noyaux d'échelons (108, 110) peuvent être revêtus simultanément de matière plastique, en opérant de la façon suivante : les chevilees d'ancrage (111) sont coulées autour des extrémités libres (108a) des branches d'un premier noyau d'échelon, puis la gaine de matière plastique (124) est coulée autour de la partie restante libre d'un deuxième noyau d'échelon (110) déjà muni des chevilles d'ancrage (111) et, dans cette opération, le premier noyau d'échelon (108) est maintenu centré, en dehors des chambres de coulée (112) prévues pour les chevilles d'ancrage (111), et le deuxième noyau d'échelon (110) est maintenu centré dans la région (122) des chevilles d'ancrage (111) déjà moulées et solidifiées dans les chambres de coulée (112 et 123 respectivement) correspondantes d'un outil de moulage (101).

7. Procédé selon une des revendications 1 à 5, caractérisé en ce que, pendant une seule et même opération de coulée, deux noyaux d'échelons (108, 110) sont revêtus simultanément de matière plastique, en opérant de la façon suivante : les chevilles d'ancrage (111) sont coulées autour des extrémités libres (108a) d'un premier noyau d'échelon (108) déjà muni d'une gaine de matière plastique (124) et une gaine de matière plastique (124) est coulée autour de la partie correspondante d'un deuxième noyau d'échelon (110), et, dans cette opération, le premier noyau d'échelon (108) est maintenu centré dans la région (139) de la gaine (124), déjà moulée et solidifiée, et le deuxième noyau d'échelon (110) est maintenu centré, en dehors de la chambre de coulée (123) prévue pour la graine (124) dans la région (137) des extrémités (110a) des branches, dans les chambres de coulée correspondantes (112 et 123 respectivement) d'un outil de moulage (101).

8. Procédé selon une des revendications 1 à 7, caractérisé en ce que, pour la coulée des deux chevilles d'ancrage (111) d'un noyau d'échelon (108) , il est prévu un moule additionnel (131, 132), mobile par rapport aux moyens de maintien (116, 119, 120) utilisés pour le noyau d'échelon (108), et dans lequel sont disposées les chambres de coulée (112) prévues pour les chevilles d'ancrage (111), et en ce que le moule additionnel (131, 132) est ensuite utilisé, à la suite de l'opération de coulée des chevilles d'ancrage (111) et de leur solidification, pour le transfert du noyau d'échelon (108) à la chambre de coulée (123) prévue pour la gaine de matière plastique (124), et pour maintenir le noyau d'échelon (108) en bonne position pendant l'opération de coulée utilisée pour la gaine (124).

9. Procédé selon une des revendications 1 à 7, caractérisé en ce que, pour la coulée de la gaine de matière plastique (124) d'un noyau d'échelon 110), il est prévu un moule additionnel (140, 141) mobile par rapport aux moyens de maintien (137, 138) prévus pour les extrémités des branches, moule additionnel qui est utilisé, à la suite de l'opération de coulée de la graine de matière plastique (124) et de sa solidification, pour le transfert du noyau d'échelon (110) à la chambre de coulée (112) prévue pour les chevilles d'ancrage (111), et pour maintenir le noyau d'échelon (110) en bonne position pendant l'opération de coulée utilisée pour les chevilles d'ancrage.

10. Procédé selon une des revendications 1 à 9, caractérisé en ce que les chambres de coulée (112) prévues pour les chevilles d'ancrage (111) d'un premier noyau d'échelon (108) et la chambre de coulée (123) prévue pour la gaine (124) d'un deuxième noyau d'échelon (110) sont chambres simultanément de la même matière plastique et avec la même pression.

11. Procédé selon une des revendications 1 à 10, caractérisé en ce que deux noyaux d'échelons (108, 110) sont disposés l'un derrière l'autre et que la chambre de coulée (123) prévue pour la partie gaine (124) du deuxième noyau d'échelon (110) est chargée de matière thermoplastique liquide à partir de sa barre transversale (109) et que les chambres de coulée (112) prévues pour les chevilles d'ancrage du premier noyau d'échelon (108) sont chargées de matière thermoplastique liquide à partir des pointes des chevilles d'ancrage.

12. Outil de moulage (33) pour la mise en oeuvre du procédé selon la revendication 1, qui comprend deux demi-moules (35/37) pouvant se séparer l'un de l'autre dans le plan des branches d'au moins une chambre de coulée (32) prévue pour le noyau d'échelon (10), les demi-moules possédant au moins une chambre de coulée pour la partie gaine (23) du noyau d'échelon et des moyens servant à maintenir le noyau d'échelon en bonne position dans la chambre de coulée, ainsi qu'au moins une conduite de liaison servant à raccorder la chambre de coulée à une presse à matière plastique, caractérisé en ce que l'outil de moulage (33) servant à revêtir totalement le noyau d'échelon (10) d'une matière plastique, est composé de deux demi-moules (35, 37) dont le demi-moule (35) présente des éléments d'éjection (41) qui sont munis de deux perçages récepteurs (39) destinés à recevoir des chevilles d'ancrage (17) déjà préformées, qui sont disposés pour se déplacer en translation par rapport au demi-moule (35), perpendiculairement à l'axe des perçages récepteurs (39), entre une position de coulée et une position d'éjection (figure 7), et dont la partie de tête qui émerge au-dessus d'un demi-moule (35) peut s'engager dans un évidement correspondant du deuxième demi-moule (27), les demi-chambres de coulée (32a, 32b), chacune dans un demi-moule (35) ou dans l'autre demi-moule (37), étant disposées dans le prolongement des perçages récepteurs (39) lorsque l'outil de moulage (33) est fermé, et formant les chambres de coulée (32) qui entourent le noyau déchelon (10, 13) à un certain écartement, ces demi-chambres formant aussi, dans les régions voisines des perçages récepteurs (39), une région de portée pour les extrémités libres des chevilles d'ancrage (17), et présentant chacune au moins une bague ou saillie d'étanchéité (49, 49a, 49b) dirigée radialement vers l'intérieur, vers l'axe de la chambre de coulée (32), et qui, dans la position de fermeture de l'outil de moulage (33), est en appui à joint étanche contre la cheville d'ancrage (17) correspondante, et forme les moyens servant à maintenir le noyau d'échelon (10, 13) centré à l'intérieur de la chambre de coulée (32).

13. Outil de moulage selon la revendication 12, caractérisé en ce que la chambre de coulée (32) entoure la totalité du noyau d'échelon (10, 13), en ce que, à la suite de la région (63) de la chambre de coulée prévue pour les chevilles d'ancrage (18), sont disposés des moyens (59) servant à maintenir centré le noyau d'échelon (10, 13), moyens qui, en même temps, ferment à joint étanche la région (63) et forment une partie de la région (69) de la chambre de coulée prévue pour la gaine (23) du noyau d'échelon (10, 13), et en ce que, dans la région (63) de la chambre de coulée prévue pour une cheville d'ancrage (18), sont disposés des moyens servant à immobiliser le noyau d'échelon (10, 13) et qui, dans une position, sont dans l'alignement de la paroi plane de la région (63) de la chambre de coulée et, dans l'autre position, attaquent les chevilles d'ancrage (18) et centrent le noyau l'échelon (10, 13) dans l'autre région (69) de la chambre de coulée.

14. Outil de moulage (101) pour la mise en oeuvre du procédé selon la revendication 1, comprenant deux demi-moules (102, 103), qui peuvent se séparer l'un de l'autre dans le plan des branches d'au moins une chambre de coulée (112, 123) prévue pour le noyau l'échelon (108, 110), demi-moules qui présentent au moins une chambre de coulée (123) prévue pour la partie gaine (124) du noyau d'échelon, et des moyens servant à maintenir le noyau d'échelon en bonne position dans la chambre de coulée, ainsi qu'au moins un conduit de liaison servant à raccorder la chambre de coulée à une presse à matière plastique, caractérisé en ce que l'outil de moulage (101) destiné à revêtir entièrement le noyau d'échelon (108, 110) d'une matière plastique est composé de deux éléments (105, 106), dont l'un (105) présente les chambres de coulée (112) prévues pour les chevilles d'ancrage (111) et des moyens (116, 119, 129 ; 139) disposés à l'extérieur de ces chambres de coulée (112), servant à maintenir le noyau de l'échelon en position par rapport à ces chambres de coulée (112) et l'autre (106) présente la chambre de coulée (123) prévue pour la partie gaine (124) située entre les chevilles d'ancrage (111), et des moyens (122, 137, 138) disposés à l'extérieur de cette chambre de coulée (123) et servant à maintenir le noyau d'échelon (108, 110) en bonne position dans cette chambre de coulée (123), et en ce que les chambres de coulée des deux éléments (105, 106) de l'outil de moulage se complètent en longueur pour former une chambre de coulée qui entoure l'ensemble du noyau d'échelon, mais ne se raccordent pas directement entre elles.

15. Outil de moulage selon la revendication 14, caractérisé en ce que les deux éléments (105, 106) de l'outil de moulage sont réunis l'un à l'autre pour former une unité.

16. Outil de moulage selon une des revendications 14 et 15, caractérisé en ce que les moyens (116, 137) servant à maintenir le noyau d'échelon (108, 110) en bonne position dans la chambre de coulée adjacente (112, 123) sont adaptés en section transversale à la section transversale du noyau d'échelon (108, 110) et ferment cette chambre de coulée à joint étanche en coopération avec le noyau d'échelon.

17. Outil de moulage selon une des revendications 14 et 15, caractérisé en ce que les moyens servant à maintenir le noyau d'échelon (108, 110) en bonne position sont composés chacun d'une chambre réceptrice (139) pour la gaine (124) moulée sur le noyau d'échelon (108) ou d'une chambre réceptrice (122) pour chacune des deux chevilles d'ancrage (111) moulées sur le noyau d'échelon (110) et en ce que l'extrémité de la gaine (124) qui est adjacente à la chambre de coulée (112) prévue pour les chevilles d'ancrage (111) ferme cette chambre de coulée à joint étanche et l'extrémité d'une cheville d'ancrage (111) qui est adjacente à la chambre de coulée (123) prévue pour la gaine (124) ferme cette chambre de coulée (123) à joint étanche.

18. Outil de moulage selon la revendication 17, caractérisé en ce que les deux chambres de coulée (112) prévues pour les chevilles d'ancrage (111) sont disposées dans un moule additionel (131, 132) mobile par rapport aux deux éléments (105, 116) du moule et lorsqu'on introduit ce moule supplémentaire (131, 132) dans le deuxième élément (106) de l'outil de moulage, ces chambres servent de chambres réceptrices (122) et de moyens pour maintenir en bonne position un noyau d'échelon (110) déjà muni de chevilles d'ancrage (111) dans la chambre de coulée (123) du deuxième élément (106) de l'outil de moulage, et en ce que les deux chambres réceptrices (122) sont elles aussi disposées dans un moule additionnel (132, 131) qui peut se déplacer par rapport aux deux éléments (105, 106) de l'outil de moulage et servent, lorsque ce moule additionnel (131, 131) est mis en place dans le premier élément (105) de l'outil de moulage, de chambres de coulée (112) prévues pour les chevilles d'ancrage (111) d'un noyau d'échelon (108), de sorte que les deux moules additionnels (131, 132) peuvent être interchangés fonctionnellement.

19. Outil de moulage selon la revendication 17, caractérisé en ce qu'aussi bien la chambre de coulée en forme de U (123) prévue pour la gaine (124) que la chambre réceptrice en forme de U (139) prévue pour la gaine sont disposées chacune dans un moule additionnel (140, 141), qui est mobile par rapport aux deux éléments (105, 106) de l'outil de moulage et peut être mis en place dans ces éléments, de telle sorte que les deux moules additionnels (149, 141) peuvent être interchangés fonctionnellement.

20. Outil de moulage selon une des revendications 14 à 19, caractérisé en ce que le demi-moule de coulée supérieur (102) et le demi-moule de coulée inférieur (103) sont divisés dans la direction longitudinale entre les chambres de coulée (112) prévues pour les chevilles d'ancrage (111) et les chambres réceptrices (122) et munies d'au moins une rallonge (128) de telle manière que les parties extérieures (129, 130) des demi-moules de coulée (102, 103) présentent chacune une chambre de coulée (112), les moyens de retenue correspondants (116), une chambre réceptrice (122) et au moins un segment de branche (123a) de la chambre de coulée (123).

FIG.1.

11

9

9

FIG 2.

13

15

25

17

19

17

21

13

10

FIG. 3.

FIG. 4.

FIG.5.

45

10

29

17

41

35

32a

29

49a

41

33                33

FIG.6.

32b

55

49b

FIG.8a.

51        53

27

55

30

37

55

49b

## FIG.7

## FIG.8

FIG.9.

FIG.10.

Fig.11

Fig.12

Fig.13

Fig.14

EP 0 241 009 B1

# Fig.15